# EUROPEAN PATENT SPECIFICATION

(11) **EP 4 398 670 B1**
(45) Date of publication and mention of the grant of the patent: **28.10.2026**
(21) Application number: 23782126.9
(22) Date of filing: 25.09.2023
(51) Int. Cl.: H04B 1/719, H04W 12/041, H04W 4/02, H04W 4/80, H04W 12/069, H04W 12/50, H04W 12/63, H04W 88/06, H04B 1/7163, H04W 8/00

(54) **ELECTRONIC DEVICE AND METHOD FOR PROVIDING SERVICE ACCORDING TO LOCATION OF ELECTRONIC DEVICE**
ELEKTRONISCHE VORRICHTUNG UND VERFAHREN ZUR BEREITSTELLUNG EINES DIENSTES GEMÄSS DER POSITION EINER ELEKTRONISCHEN VORRICHTUNG
DISPOSITIF ÉLECTRONIQUE ET PROCÉDÉ DE FOURNITURE DE SERVICE EN FONCTION DE LA POSITION DU DISPOSITIF ÉLECTRONIQUE

(30) Priority: 23.11.2022 KR 20220158802; 27.01.2023 KR 20230010693
(43) Date of publication of application: 10.07.2024
(73) Proprietor: Samsung Electronics Co., Ltd., Suwon-si, Gyeonggi-do 16677 (KR)
(72) Inventor: KIM, Hyunchul, Suwon-si, Gyeonggi-do 16677 (KR); KANG, Moonseok, Suwon-si, Gyeonggi-do 16677 (KR); JANG, Jonghoon, Suwon-si, Gyeonggi-do 16677 (KR); CHOI, Kunyoung, Suwon-si, Gyeonggi-do 16677 (KR)
(74) Representative: Gulde & Partner
(86) International application number: PCT/KR2023/014710
(87) International publication number: WO 2024/111852

(56) References cited:
- EP-A1- 4 293 925
- KR-A- 20210 102 273
- KR-A- 20220 140 203
- KR-A- 20220 140 203
- KR-A- 20220 152 779
- KR-A- 20220 152 779
- US-A1- 2019 013 937
- US-A1- 2021 051 532
- US-A1- 2021 400 427

## Description

### [Technical Field]

The following descriptions relate to an electronic device and a method for providing a service according to a location of the electronic device.

### [Background Art]

Ultra-wide band (UWB) communication technology is a communication technology for transmitting data with low power via a broadband. Compared to radio access technology (RAT), which is distinct from the UWB communication, the UWB communication technology may be used to measure accurate distances and angles. Since the UWB communication technology may transmit and receive a signal via the broadband, interference may not occur to the RAT, which is distinct from the UWB communication. A prior art of KR 2022 0140203 A concerns UWB communication where a device to communicate with an external electronic device is determined based on first quality information and second quality information obtained by a second electronic device.

### [Disclosure]

### [Technical Solution]

A first aspect of the present invention concerns a first electronic device comprising: a first communication circuit supporting an ultra-wide band, UWB, communication; a second communication circuit supporting a radio access technology, RAT, distinct from the UWB communication; a memory; and a processor operatively coupled with the first communication circuit, the second communication circuit, and the memory, wherein the processor is configured to: transmit, through the second communication circuit, a first signal for controlling a second electronic device, which is connected with the first electronic device, to sniff at least a portion of a plurality of UWB signals for UWB ranging exchanged between the first electronic device and at least one of external electronic device, to the second electronic device, after transmitting the first signal to the second electronic device, exchange, through the first communication circuit, the plurality of UWB signals with the at least one external electronic device, based on the exchange of the plurality of UWB signals, receive, from the second electronic device, a second signal for requesting to exchange a plurality of other UWB signals with the at least one external electronic device, and cease, based on the second signal, exchanging of the plurality of UWB signals.

Preferably, the processor is further configured to identify whether a first security key for the first electronic device used for the UWB communication is the same as a second security key for the second electronic device.

Preferably, the processor is further configured to: based on identifying that the first security key is the same as the second security key, transmit, through the second communication circuit, the first signal to the second electronic device.

Preferably, the processor is further configured to: establish, through the second communication circuit, a connection with at least one of the at least one external electronic device, obtain at least one parameter for performing the UWB communication, from the at least one of the at least one external electronic device, and obtain, based on the at least one parameter, the first security key.

Preferably, the processor is further configured to: exchange, based on identifying that the first security key is distinct from the second security key, the plurality of UWB signals according to a first period, and transmit, to the second electronic device, result information on exchanging the plurality of UWB signals performed according to the first period.

Preferably, the processor is further configured to: receive, through the second communication circuit, a third signal for changing a period for exchanging the plurality of UWB signals from the second electronic device changing the plurality of other UWB signals according to a second period, and change, based on the third signal, the period for exchanging the plurality of UWB signals form the first period to the second period.

Preferably, the first period is set shorter than the second period.

Preferably, the processor is further configured to: identify, based on exchanging the plurality of UWB signals, location of the first electronic device, and based on a distance between location of the first electronic device and location of external object comprising the at least one external electronic device is equal to or greater than a predetermined distance, transmit a signal for controlling the second electronic device to cease exchanging of the plurality of other UWB signals.

Preferably, the processor is further configured to: identify that the distance between the location of the first electronic device and the location of external object is less than the predetermined distance, determine, based on the distance between the location of the first electronic device and the location of external object, the period for exchanging the plurality of other UWB signals, and transmit, to the second electronic device, a signal for controlling the second electronic device to exchange the plurality of other UWB signals according to the determined period.

Preferably, the processor is further configured to: transmit a first UWB signal and a second UWB signal among the plurality of UWB signals to the at least one external electronic device, receive, based on the second UWB signal, at least a portion of third UWB signals among the plurality of UWB signals transmitted from each of the at least one external electronic device, and transmit, based on the at least a portion of the third UWB signals, a fourth UWB signal and a fifth UWB signal among the plurality of UWB signals to the at least one external electronic device.

Preferably, the processor is further configured to transmit result information on exchanging the plurality of UWB signals to the second electronic device, wherein the result information on exchanging the plurality of UWB signals comprises at least one of information on the number of at least a portion of the third UWB signals and quality information on at least a portion of the third UWB signals.

Preferably, the processor is further configured to: receive a sixth UWB signal including information on location of the first electronic device among the plurality of UWB signals from at least one of the at least one external electronic device, based on the information on the location of the first electronic device, to the second electronic device, and transmit a signal for controlling the second electronic device to change a period for identifying the plurality of UWB signals between the first electronic device and the at least one external electronic device.

Preferably, the processor is further configured to sniff the plurality of other UWB signals between the second electronic device and the at least one external electronic device based on ceasing exchanging the plurality of UWB signals.

Preferably, the processor is further configured to: identify information on resource of the first electronic device and information on resource of the second electronic device, and determine a device for identifying an external object comprising the at least one external electronic device as at least one of the first electronic device and the second electronic device based on the information on resource of the first electronic device and the information on resource of the second electronic device, wherein the information on resource of the first electronic device includes at least one of information on remaining battery capacity of the first electronic device, information on the number of external devices connected to the first electronic device, or information on a first scan period for identifying the external object, and wherein the information on resource of the second electronic device includes at least one of information on remaining battery capacity of the second electronic device, information on the number of external devices connected to the second electronic device, or information on a second scan period for identifying the external object.

A second object of the present invention is a method of a first electronic device comprising: transmitting, through a second communication circuit of a first communication circuit supporting an ultra-wide band, UWB, communication and the second communication circuit supporting a radio access technology, RAT, distinct from the UWB communication of the first electronic device, a first signal for controlling a second electronic device, which is connected with the first electronic device, to sniff at least a portion of a plurality of UWB signals for UWB ranging, exchanged between the first electronic device and at least one of external electronic device, to the second electronic device, after transmitting the first signal to the second electronic device, exchanging, through the first communication circuit, the plurality of UWB signals with the at least one external electronic device, based on the exchange of the plurality of UWB signals, receiving, from the second electronic device, a second signal for requesting to exchange a plurality of other UWB signals with the at least one external electronic device, and ceasing, based on the second signal, exchanging of the plurality of UWB signals.

### [Description of the Drawings]

FIG. 1 is a block diagram of an electronic device in a network environment according to an embodiment.
FIG. 2A illustrates an example of an environment including an electronic device and at least one external electronic device, according to an embodiment.
FIG. 2B illustrates an example of a signal flowchart between an electronic device and at least one external electronic device, according to an embodiment.
FIG. 3A illustrates an example of an environment including a first electronic device, a second electronic device, and at least one external electronic device, according to an embodiment.
FIG. 3B illustrates an example of a signal flowchart between a first electronic device, a second electronic device, and at least one external electronic device, according to an embodiment.
FIG. 4A illustrates an example of a simplified block diagram of a first electronic device, according to an embodiment.
FIG. 4B illustrates an example of a simplified block diagram of a second electronic device, according to an embodiment.
FIG. 4C illustrates an example of an operation of a first electronic device and a second electronic device according to an embodiment.
FIG. 5 is a flowchart illustrating an operation of a first electronic device, according to an embodiment.
FIG. 6A is a flowchart illustrating an operation of a first electronic device according to a claimed embodiment.
FIG. 6B is a flowchart illustrating an operation of a second electronic device according to an embodiment.
FIG. 7 illustrates a signal flowchart between a first electronic device, a second electronic device, and at least one external electronic device, according to an embodiment.
FIG. 8 illustrates a signal flowchart between a first electronic device, a second electronic device, and at least one external electronic device, according to an embodiment.
FIG. 9A is a flowchart illustrating an operation of a first electronic device, according to an embodiment.
FIG. 9B is a flowchart illustrating an operation of a second electronic device, according to an embodiment.
FIG. 10A is a flowchart illustrating an operation of a first electronic device, according to an embodiment.
FIG. 10B is a flowchart illustrating an operation of a second electronic device, according to an embodiment.

### [Mode for Invention]

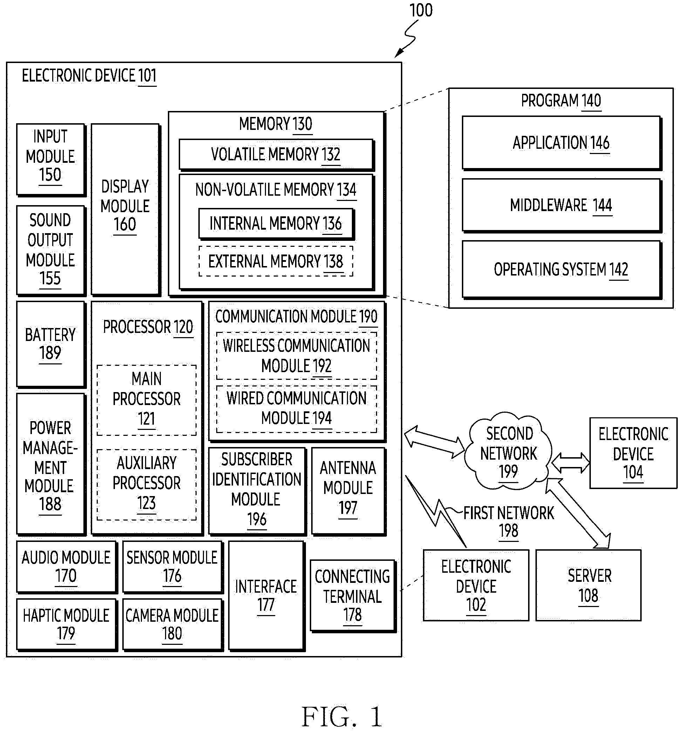

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

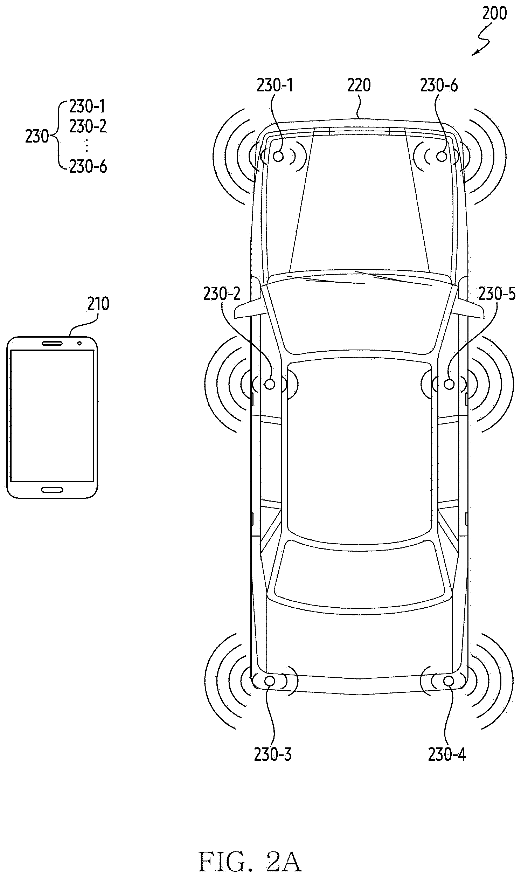

FIG. 2A illustrates an example of an environment including an electronic device and at least one external electronic device, according to an embodiment.

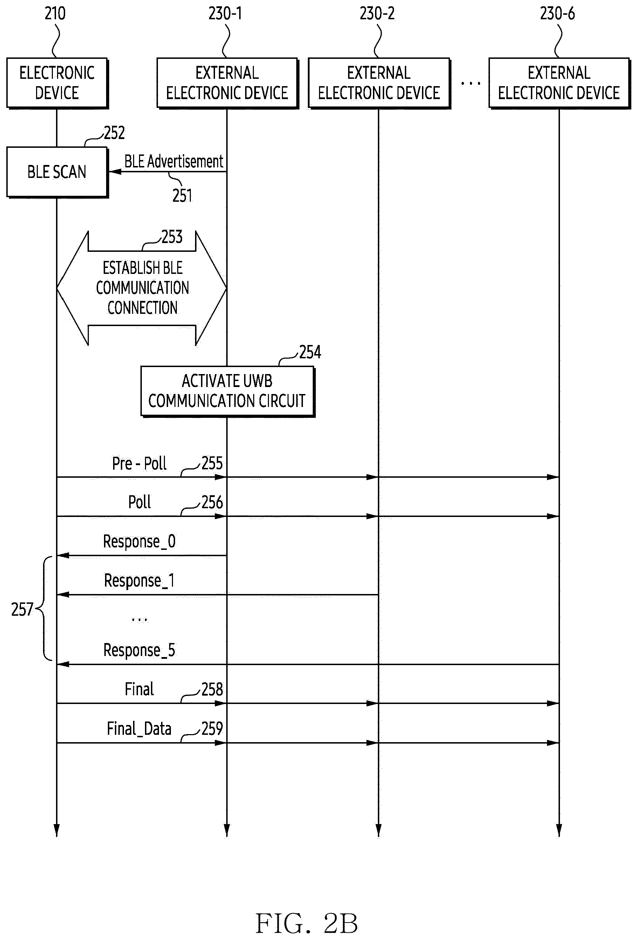

FIG. 2B illustrates an example of a signal flowchart between an electronic device and at least one external electronic device, according to an embodiment.

Referring to FIG. 2A, the environment 200 may include an electronic device 210 and an external object 220.

According to an embodiment, the electronic device 210 may communicate with at least one external electronic device 230 based on UWB communication and/or radio access technology (RAT) distinct from the UWB communication. For example, the electronic device 210 may perform the UWB communication and/or Bluetooth communication (e.g., Bluetooth low energy (BLE) communication) with the at least one external electronic device 230.

According to an embodiment, the external object 220 may include the at least one external electronic device 230. The at least one external electronic device 230 may include an external electronic device 230-1 to an external electronic device 230-6. The at least one external electronic device 230 may communicate with the electronic device 210 based on the UWB communication and/or the RAT distinct from the UWB communication. For example, the at least a portion of the at least one external electronic device 230 may communicate with the electronic device 210 based on the UWB communication and the Bluetooth communication (e.g., BLE communication).

According to an embodiment, the external object 220 may include a processor for controlling at least one external electronic device 230. The external object 220 may control the at least one external electronic device 230 using the processor. For example, the external objects 220 may include a component (e.g., a communication circuit) for communicating with an external device based on the RAT distinct from the UWB communication. The processor of the external object 220 may perform the Bluetooth communication (e.g., BLE communication) through the component (e.g., a communication circuit) for performing communication with the external device. Hereinafter, for convenience of explanation, it may be explained that at least one (e.g., the external electronic device 230-1) of the at least one external electronic device 230 includes a component for communicating with an external device based on the RAT distinct from the UWB communication.

FIG. 2A illustrates that the external object 220 includes six external electronic devices (e.g., the external electronic device 230-1 to the external electronic devices 230-6), but it is an example, and it is not limited thereto. The number of the at least one external electronic device 230 included in the external object 220 may be variously set.

According to an embodiment, the at least one external electronic device 230 may perform the UWB communication with the electronic device 210. The at least one external electronic device 230 may identify a location of the electronic device 210 based on the UWB communication with the electronic device 210. For example, the at least one external electronic device 230 may identify a relative location of the electronic device 210 with respect to the external object 220 including the at least one external electronic device 230, based on the UWB communication with the electronic device 210. For example, each of the at least one external electronic device 230 may identify a distance from the electronic device 210 based on the UWB communication. For example, one of the at least one external electronic device 230 may identify a relative location of the electronic device 210 with respect to the external object 220, based on distances between each of the at least one external electronic device 230 and the electronic device 210. For example, a processor of the external object 220 may identify distances between each of the at least one external electronic device 230 and the electronic device 210. The processor of the external object 220 may identify a relative location of the electronic device 210 with respect to the external object 220, based on the distances between each of the at least one external electronic device 230 and the electronic device 210.

According to an embodiment, the at least one external electronic device 230 may provide various services based on a location (e.g., the relative location of the electronic device 210 with respect to the external object 220) of the electronic device 210. For example, the at least one external electronic device 230 may provide various services based on the distance and angle of the electronic device 210 with respect to the external object 220. For example, the at least one external electronic device 230 may provide various services based on a location of a user possessing the electronic device 210.

For example, an external object 220 (e.g., a car) may provide a car connectivity consortium (CCC) digital key service through at least one external electronic device 230. The external object 220 (e.g., the at least one external electronic device 230) may identify a location of the electronic device 210, based on the access of the electronic device 210 (or the user possessing the electronic device 210) to the external object 220. For example, the at least one external electronic device 230 may perform UWB ranging with the electronic device 210, based on the access of the electronic device 210 having a pre-issued key (e.g., root key) to the external object 220. The at least one external electronic device 230 may perform an operation (e.g., unlock operation) on the external object 220, based on identifying a location (e.g., relative location) of the electronic device 210.

Although FIG. 2A illustrates the external object 220 as a vehicle, it is not limited thereto. For example, the external object 220 may be implemented as various electronic devices including a door lock, a laptop, a desktop, or a security gate.

According to an embodiment, the at least one external electronic device 230 may perform UWB ranging by performing operations illustrated in FIG. 2B with the electronic device 210.

Referring to FIG. 2B, in operation 251, the external electronic device 230-1 among at least one external electronic device (e.g., the at least one external electronic device 230 of FIG. 2A) may transmit a BLE advertisement message. For example, the external electronic device 230-1 may transmit the BLE advertisement message according to a designated time interval. For example, the external electronic device 230-1 may transmit the BLE advertisement message based on a designated period.

**In** operation 252, the electronic device 210 may perform a BLE scan operation. The electronic device 210 may perform the BLE scan operation to receive the BLE advertisement message.

According to an embodiment, the electronic device 210 may perform an owner pairing operation with an external object (e.g., the at least one external electronic device 230) before performing the BLE scan operation. The electronic device 210 may obtain a root key having control authority for the external object 220, based on the owner pairing operation. For example, the electronic device 210 may obtain the root key having control authority for the external object 220 from a server (or the external object 220).

According to an embodiment, the electronic device 210 may set a scan filter for the BLE advertisement message. For example, the electronic device 210 may receive the BLE advertisement message from external devices around the electronic device 210 as well as the external electronic device 230-1. The electronic device 210 may identify a BLE advertisement message including an identifier (e.g., universally unique identifier (UUID)) corresponding to the external electronic device 230-1 among identifiers included in the received BLE advertisement messages. Accordingly, the electronic device 210 may identify the BLE advertisement message transmitted from the external electronic device 230-1.

In operation 253, the electronic device 210 may establish a BLE communication connection. For example, the electronic device 210 may establish the BLE communication connection with the external electronic device 230-1 among at least one external electronic device 230. For example, the electronic device 210 may establish the BLE communication connection with the external object 220. The external object 220 may establish the BLE communication connection with the electronic device 210 through a component for the BLE communication connection.

According to an embodiment, the electronic device 210 may exchange at least one parameter based on the BLE communication. The electronic device 210 may exchange at least one parameter for the UWB communication based on the BLE communication. The electronic device 210 may obtain at least one parameter for the UWB communication based on the BLE communication. The electronic device 210 may obtain a security key based on the at least one parameter for the UWB communication. The electronic device 210 may perform UWB communication with the at least one external electronic device 230 using the obtained security key.

In operation 254, the external electronic device 230-1 may activate a communication circuit for the UWB communication. For example, the external electronic device 230-1 may activate the communication circuit for the UWB communication, based on exchanging at least one parameter (e.g., the at least one parameter for the UWB communication) based on the BLE communication. In operation 254, the external electronic device 230-1 as well as the external electronic devices 230-2 to 230-6 may activate the communication circuit for the UWB communication.

According to an embodiment, the external electronic device 230-1 may activate a communication circuit for the UWB communication between operations 252 and 253. For example, in case that BLE advertisement messages obtain information for UWB ranging, the external electronic device 230-1 may activate a communication circuit for the UWB communication between operations 252 and 253.

In operation 255, the electronic device 210 may transmit a pre-poll message to the at least one external electronic device 230. For example, the electronic device 210 may broadcast (or multicast) the pre-poll message based on the UWB communication. Each of the at least one external electronic device 230 may receive a pre-poll message transmitted from the electronic device 210. For example, the pre-poll message may be used to transmit control information on ranging operation. For example, the pre-poll message may include at least one of UWB session ID information, Poll STS index information, ranging block information, hop flag information, and round index information.

In operation 256, the electronic device 210 may transmit a poll message to the at least one external electronic device 230. For example, the electronic device 210 may broadcast (or multicast) the poll message based on the UWB communication. Each of the at least one external electronic device 230 may receive a poll message transmitted from the electronic device 210.

In operation 257, each of the at least one external electronic device 230 may transmit response messages to the electronic device 210. For example, the at least one external electronic device 230 may transmit the response messages to the electronic device 210 based on a designated schedule. For example, information on the designated schedule may be included in the pre-poll message. For example, the designated schedule may be set by the processor of the external object 220.

For example, the external electronic device 230-1 may transmit a response message based on the poll message transmitted from the electronic device 210. The response message transmitted from the external electronic device 230-1 may be referred to as response_0. For example, the external electronic device 230-2 may transmit a response message based on the poll message transmitted from the electronic device 210. The response message transmitted from the external electronic device 230-2 may be referred to as response_1. For example, the external electronic device 230-6 may transmit a response message based on the poll message transmitted from the electronic device 210. The response message transmitted from the external electronic device 230-6 may be referred to as response_5.

In operation 258, the electronic device 210 may transmit a final message to the at least one external electronic device 230. For example, the electronic device 210 may broadcast (or multicast) a final message to the at least one external electronic device 230, based on response messages transmitted from the at least one external electronic device 230.

For example, a poll message, a response message (e.g., response_0 to response _2), and a final message may be used to identify the time at which a signal was transmitted and received in the electronic device 210 and the at least one external electronic device 230. The poll message, the response message (e.g., response_0 to response _2), and the final message may not include a payload.

In operation 259, the electronic device 210 may transmit a final message to the at least one external electronic device 230 and then transmit a final_data message to the at least one external electronic device 230. For example, the electronic device 210 may broadcast (or multicast) the final_data message to the at least one external electronic device 230. For example, the final_data message may include information on a time difference between transmission of the poll message and the final message. For example, the final_data message may include information on a difference between a time at which the poll message is transmitted and a time at which each response message (e.g., response_0 to response_5) is received.

According to an embodiment, the electronic device 210 and the at least one external electronic device 230 may perform UWB ranging based on operations 255 to 259. For example, the electronic device 210 and the at least one external electronic device 230 may perform 1:N (e.g., 1:6) double sided-two way ranging (DS-TWR). The electronic device 210 may operate as an initiator (or controller). The at least one external electronic device 230 may operate as a responder (or controlee). According to an embodiment, the electronic device 210 and the at least one external electronic device 230 may perform single sided-two way ranging (SS-TWR).

The external object 220 (or a processor of the external object 220) including at least one external electronic device 230 may identify a location of the electronic device 210, based on performing UWB ranging. The external object 220 (or the processor of the external object 220) may identify a relative location of the electronic device 210 with respect to the external object 220. The external object 220 (or the processor of the external object 220) may provide various services for the external object 220 based on the location of the electronic device 210. For example, the external object 220 may perform one of various operations with respect to the external object 220, based on the location of the electronic device 210. For example, the external object 220 may be a vehicle. The external object 220 (or the processor of the external object 220) may perform any of lock/unlock, welcome light, engine start/stop, and/or remote control based on the location of the electronic device 210. For example, the external object 220 may lock and/or unlock a door or trunk based on identifying that the location of the electronic device 210 is located on the door or trunk of the external object 220.

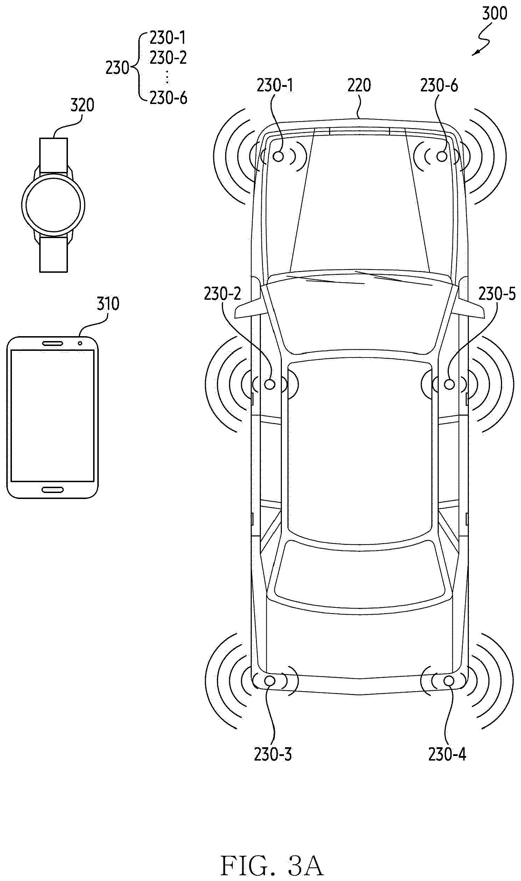

FIG. 3A illustrates an example of an environment including a first electronic device, a second electronic device, and at least one external electronic device, according to an embodiment.

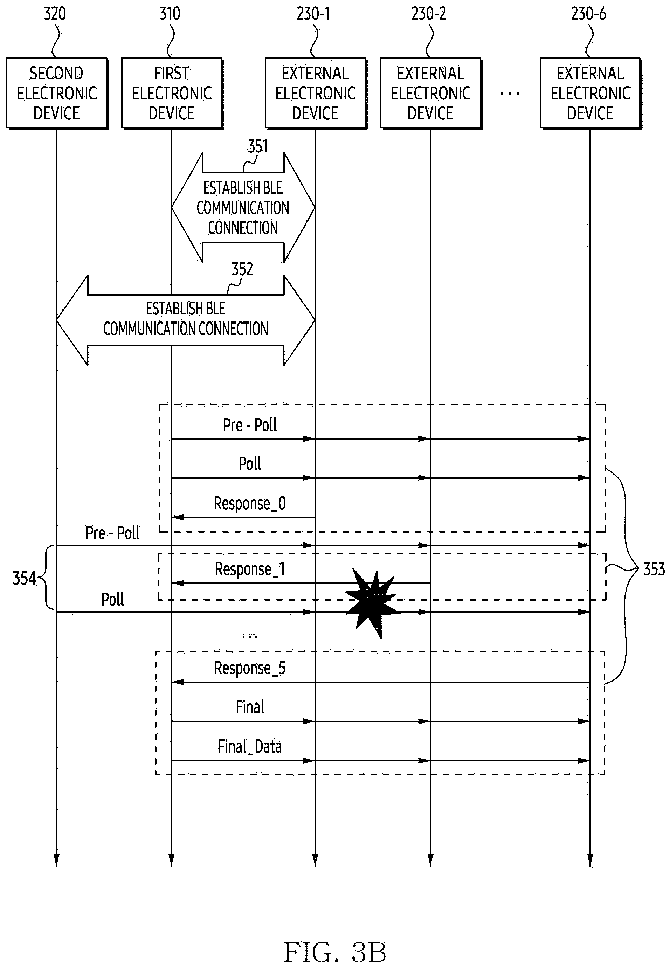

FIG. 3B illustrates an example of a signal flowchart between a first electronic device, a second electronic device, and at least one external electronic device, according to an embodiment.

Referring to FIG. 3A, environment 300 may include a first electronic device 310, a second electronic device 320, and an external object 220. According to an embodiment, the first electronic device 310 and the second electronic device 320 illustrated in FIG. 3A are exemplary, and it is not limited thereto. According to an embodiment, the first electronic device 310 may be set as a watch, and the second electronic device 320 may be a smartphone (or terminal).

According to an embodiment, each of the first electronic device 310 and the second electronic device 320 may correspond to the electronic device 210 of FIG. 2A. For example, each of the first electronic devices 310 and the second electronic device 320 may communicate with the at least one external electronic device 230, based on UWB communication and radio access technology (RAT) distinct from the UWB communication.

According to an embodiment, the external object 220 may correspond to the external object 220 of FIG. 2A. For example, the external object 220 may include the at least one external electronic device 230. For example, the at least one external electronic device 230 included in the external object 220 may communicate with the first electronic device 310 and the second electronic device 320, based on the UWB communication and the RAT distinct from the UWB communication.

According to an embodiment, the first electronic device 310 and the second electronic device 320 may be used by the same user. For example, the first electronic device 310 and the second electronic device 320 may be owned by the same user. Accordingly, each of the first electronic device 310 and the second electronic device 320 may obtain a root key (or security key) for controlling the external object 220. Each of the first electronic device 310 and the second electronic device 320 may control the external object 220, based on the root key (or security key) for controlling the external object 220.

According to an embodiment, the first electronic device 310 and the second electronic device 320 may simultaneously control the external object 220. When the first electronic device 310 and the second electronic device 320 simultaneously control the external object 220, unnecessary power consumption may occur in the first electronic device 310, the second electronic device 320, and the external object 220 (or the at least one external electronic device 230). When the at least one external electronic device 230 performs UWB ranging independently of the first electronic device 310 and the second electronic device 320, interference between UWB signals may occur, and performance may be degraded. FIG. 3B illustrates an example in which collision between UWB signals occurs when the first electronic device 310 and the second electronic device 320 perform UWB ranging independently of the at least one external electronic device 230.

Referring to FIG. 3B, in operation 351, the first electronic device 310 may establish a BLE communication connection with the external electronic device 230-1, which is one of at least one external electronic device (e.g., the at least one external electronic device 230 of FIG. 3A). The first electronic device 310 may exchange at least one parameter for establishing a first session with respect to the UWB communication with the external electronic device 230-1, based on the BLE communication connection. The first electronic device 310 may establish the first session with respect to the UWB communication with the at least one external electronic device 230, based on the at least one parameter.

In operation 352, the second electronic device 320 may establish the BLE communication connection with the external electronic device 230-1, which is one of the at least one external electronic device 230. The second electronic device 320 may exchange at least one parameter for establishing a second session with respect to the UWB communication with the external electronic device 230-1, based on the BLE communication connection. The second electronic device 320 may establish the second session with respect to the UWB communication with the at least one external electronic device 230, based on the at least one parameter.

In operations 351 and 352, even when the users of the first electronic device 310 and the second electronic device 320 are the same, the first electronic device 310 and the second electronic device 320 may independently establish a session for the UWB communication with at least one external electronic device 230.

In operation 353, the first electronic device 310 may perform first UWB ranging with the at least one external electronic device 230. The first electronic device 310 may operate as an initiator for the first UWB ranging. The first electronic device 310 may determine a timing for starting the first UWB ranging.

For example, the first electronic device 310 may broadcast a pre-poll message and a poll message to the at least one external electronic device 230. Each of the at least one external electronic device 230 may receive a pre-poll message and a poll message, and then transmit response messages with respect to the poll message to the first electronic device 310. The electronic device 210 may broadcast a final message and a final_data message to the at least one external electronic device 230 based on the response messages.

In operation 354, while the first electronic device 310 performs the first UWB ranging with the at least one external electronic device 230, the second electronic device 320 may perform second UWB ranging with the at least one external electronic device 230. The second electronic device 320 may operate as an initiator for the second UWB ranging. The second electronic device 320 may determine a timing for starting the second UWB ranging. For example, the second electronic device 320 may broadcast a pre-poll message and a poll message to the at least one external electronic device 230.

For example, the poll message transmitted from the second electronic device 320 may conflict with a response_1 message transmitted from the external electronic device 230-2 to the first electronic device 310. Accordingly, the at least one external electronic device 230 may not perform the UWB ranging with the second electronic device 320.

As the first UWB ranging and the second UWB ranging are performed independently, a collision may occur between a portion of a plurality of UWB signals for the first UWB ranging and a portion of a plurality of UWB signals for the second UWB ranging. When the collision occurs, only one of the first UWB ranging and the second UWB ranging may be performed, or both of the first UWB ranging and the second UWB ranging may not be performed.

According to an embodiment, the first electronic device 310 and the second electronic device 320 may prevent a continuous collision by using a ranging round hopping operation. However, the first electronic device 310 and the second electronic device 320 may not completely prevent a collision between UWB signals. In addition, since the probability of collision between UWB signals increases as the number of devices performing the UWB ranging with the at least one external electronic device 230 increases, performance degradation of the entire UWB system may occur.

In the following specification, embodiments with respect to operations of the first electronic device 310 and the second electronic device 320 for configuring UWB ranging to be performed using only one device when the first electronic device 310 and the second electronic device 320 perform the same service for the external object 220 may be described. However, the embodiment described later is not limited to a case where the first electronic device 310 and the second electronic device 320 perform the same service for the external object 220. For example, when the first electronic device 310 and the second electronic device 320 satisfy a designated condition, an operation according to the embodiment described later may be performed in the first electronic device 310 and the second electronic device 320. For example, the designated condition may include a case where a value for the possibility of collision is greater than or equal to a threshold value and/or a case where a distance between the first electronic device 310 and the second electronic device 320 is within a designated distance.

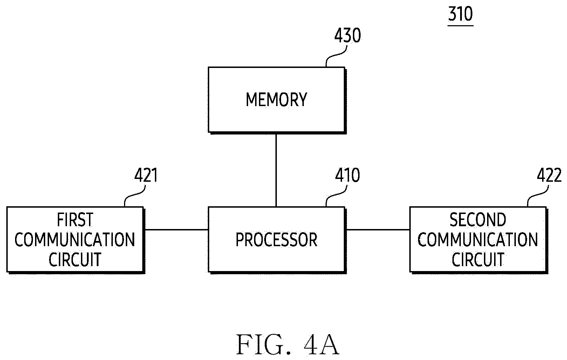

FIG. 4A illustrates an example of a simplified block diagram of a first electronic device, according to an embodiment.

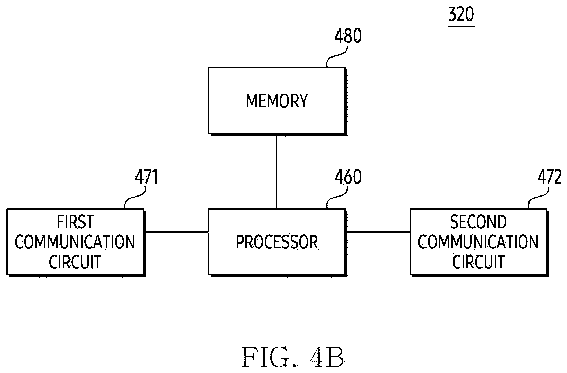

FIG. 4B illustrates an example of a simplified block diagram of a second electronic device, according to an embodiment.

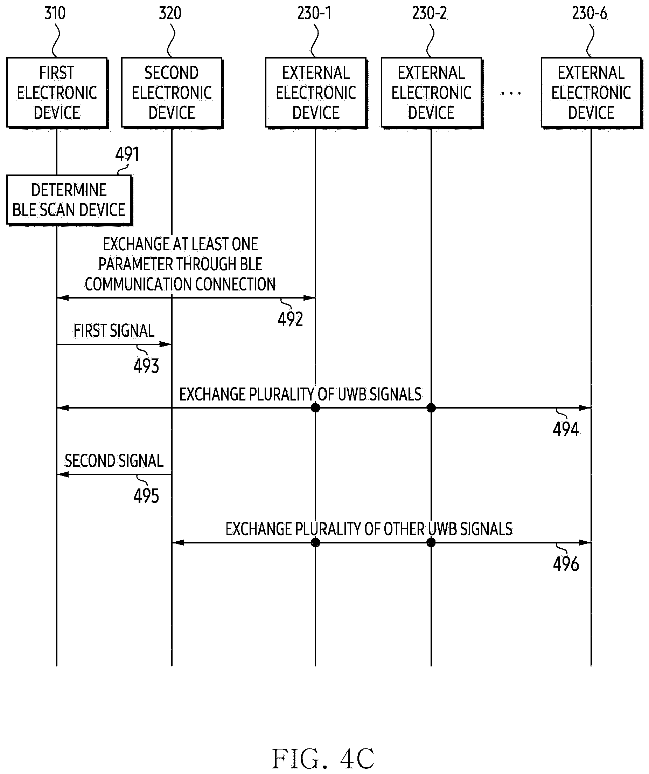

FIG. 4C illustrates an example of an operation of a first electronic device and a second electronic device according to an embodiment.

Referring to FIG. 4A, the first electronic device 310 may include some or all of the components of the electronic device 101 illustrated in FIG. 1.

According to an embodiment, the first electronic device 310 may include a processor 410, a first communication circuit 421, a second communication circuit 422, and/or a memory 430. According to an embodiment, the first electronic device 310 may include at least one of a processor 410, a first communication circuit 421, a second communication circuit 422, and a memory 430. For example, at least a portion of the processor 410, the first communication circuit 421, the second communication circuit 422, and the memory 430 may be omitted according to embodiments. Although not illustrated, the first electronic device 310 may include various components in addition to the processor 410, the first communication circuit 421, the second communication circuit 422, and the memory 430.

According to an embodiment, the first electronic device 310 may include the processor 410. The processor 410 may correspond to the processor 120 of FIG. 1. The processor 410 may be operatively coupled with or connected to the first communication circuit 421, the second communication circuit 422, and the memory 430. The fact that the processor 410 is operatively coupled with or connected to the first communication circuit 421, the second communication circuit 422, and the memory 430 may indicate that the processor 410 may control the first communication circuit 421, the second communication circuit 422, and the memory 430. For example, the first communication circuit 421, the second communication circuit 422, and the memory 430 may be controlled by the processor 410.

According to an embodiment, the processor 410 may include a hardware component for processing data based on one or more instructions. Hardware components for processing data may include any of, for example, an arithmetical and logical unit (ALU), a field programmable gate array (FPGA), and/or a central processing unit (CPU).

According to an embodiment, the first electronic device 310 may include a first communication circuit 421 and a second communication circuit 422. The first communication circuit 421 and the second communication circuit 422 may correspond to the communication module 190 of FIG. 1.

For example, the first communication circuit 421 may be used to exchange UWB signals with the at least one external electronic device 230. The processor 410 may perform a ranging operation by exchanging UWB signals with the at least one external electronic device 230 using the first communication circuit 421. For example, the processor 410 may exchange a plurality of UWB signals with the at least one external electronic device 230 so that the at least one external electronic device 230 may identify a location of the first electronic device 310. For example, the first communication circuit 421 may be referred to as a UWB communication circuit.

For example, the second communication circuit 422 may be used to support various radio access technology (RAT), except for the UWB communication. For example, the processor 410 may establish a connection with one of the at least one of the external electronic devices 230 through BLE communication by using the second communication circuit 422. For example, the processor 410 may establish a connection with the external electronic device 230-1 through the BLE communication. The processor 410 may obtain at least one parameter for performing the UWB communication through the BLE communication. The processor 410 may establish a UWB communication connection with the at least one external electronic device 230 by using the first communication circuit 421, based on the at least one parameter.

Although not illustrated, the first communication circuit 421 and the second communication circuit 422 may be directly connected to each other.

According to an embodiment, the first electronic device 210 may include the memory 430. The memory 430 may be used to store information or data. For example, the processor 410 may store a root key obtained from a server or the external electronic device 230-1 by using the memory 430. For example, the processor 410 may store an identifier corresponding to the external electronic device 230-1 for a BLE scan operation by using the memory 430. For example, the memory 430 may correspond to the memory 130 of FIG. 1. For example, the memory 430 may be a volatile memory unit or units. For example, the memory 430 may be a non-volatile memory unit or units. For example, the memory 430 may be another shape of computer-readable medium, such as a magnetic or optical disk.

Referring to FIG. 4B, the second electronic device 320 may include some or all of the components of the electronic device 101 illustrated in FIG. 1.

According to an embodiment, the second electronic device 320 may include the same or similar components as the first electronic device 310. For example, the second electronic device 320 may include a processor 460, a first communication circuit 471, a second communication circuit 472, and/or a memory 480. According to an embodiment, the second electronic device 320 may include at least one of the processor 460, the first communication circuit 471, the second communication circuit 472, and the memory 480. For example, at least a portion of the processor 460, the first communication circuit 471, the second communication circuit 472, and the memory 480 may be omitted according to embodiments. Although not illustrated, the second electronic device 320 may include various components in addition to the processor 460, the first communication circuit 471, the second communication circuit 472, and the memory 480.

According to an embodiment, the processor 460 of the second electronic device 320 may correspond to the processor 410 of the first electronic device 310. The first communication circuit 471 of the second electronic device 320 may correspond to the first communication circuit 421 of the first electronic device 310. The second communication circuit 472 of the second electronic device 320 may correspond to the second communication circuit 422 of the first electronic device 310. The memory 480 of the second electronic device 320 may correspond to the memory 430 of the first electronic device 310.

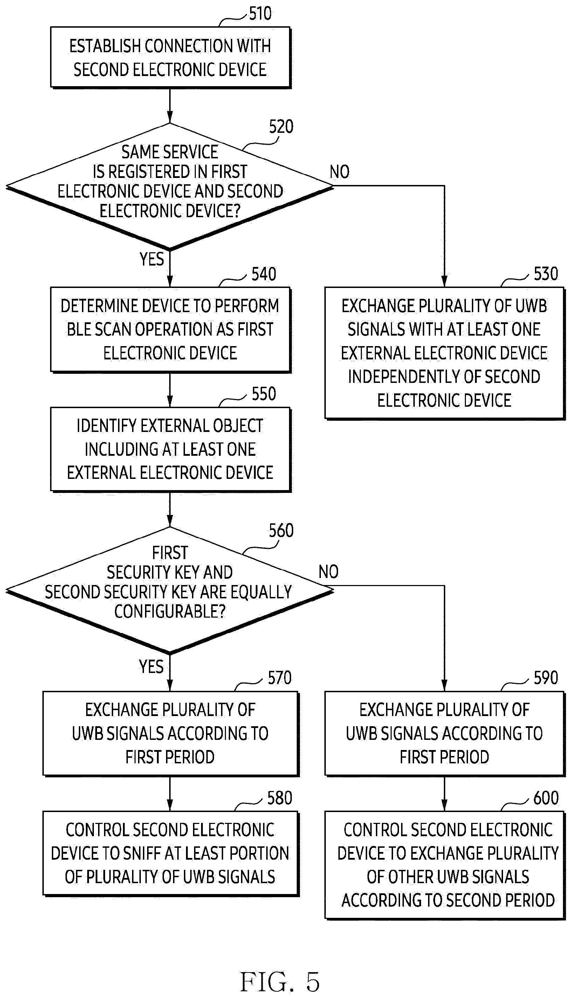

Referring to FIG. 4C, in operation 491, the processor 410 of the first electronic device 310 may determine a BLE scan device. For example, the processor 410 may determine a device to perform a BLE scan operation as the first electronic device 310. Although it has been described in operation 491 that the processor 410 of the first electronic device 310 performs the BLE scan operation, the processor 460 of the second electronic device 320 may determine the BLE scan device, according to an embodiment. A specific example of operation 491 will be described later in operation 540 of FIG. 5.

In operation 492, when the BLE scan device is determined as the first electronic device 310, the processor 410 may exchange at least one parameter through a BLE communication connection with the external object 220 including at least one external electronic device (e.g., the at least one external electronic device 230 of FIG. 2A). For example, the processor 410 of the first electronic device 310 may obtain at least one parameter for UWB communication based on BLE communication. The at least one parameter may be used to establish the UWB communication. Operation 492 may be related to operation 253 of FIG. 2B.

According to an embodiment, the processor 410 may identify whether a first security key with respect to the first electronic device 310 and a second security key with respect to the second electronic device 320 may be set to be the same. The processor 410 may perform operation 492 based on identifying that the first security key and the second security key are equally configurable.

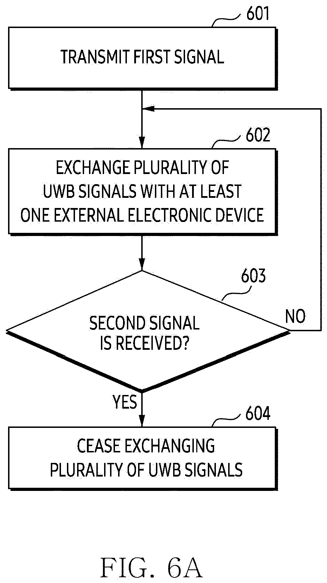

In operation 493, the processor 410 may transmit a first signal to the second electronic device 320. For example, the processor 410 may transmit a first signal including at least one parameter for UWB communication to the second electronic device 320 through the second communication circuit 422. A specific example of operation 493 will be described in operation 601 of FIG. 6A. The coordination of UWB communication between the first electronic device (310) and the second electronic device (320) is aimed at preventing collisions between UWB signals and increasing performance, based on limiting the number of electronic devices participating in UWB ranging.

In operation 494, the processor 410 may exchange a plurality of UWB signals with the at least one external electronic device 230 by using the first communication circuit 421. For example, the processor 410 may establish a session for the UWB communication, based on at least one parameter. The processor 410 may exchange the plurality of UWB signals by using the first communication circuit 421 through the established session. For example, the processor 410 may exchange the plurality of UWB signals with the at least one external electronic device 230 by using the first communication circuit 412. For example, the processor 410 may perform UWB ranging by exchanging the plurality of UWB signals. A specific example of operation 494 will be described in operation 602 of FIG. 6A.

Although not illustrated, while operation 494 is performed, the processor 460 of the second electronic device 320 may identify the plurality of UWB signals. For example, the processor 460 may sniff (or monitor) the plurality of UWB signals. The processor 460 may sniff at least a portion of the plurality of UWB signals exchanged between the first electronic device 310 and at least one external electronic device 230.

In operation 495, the processor 460 of the second electronic device 320 may transmit a second signal to the first electronic device 310. For example, the second signal may be a signal requesting to change a device that will perform UWB ranging with the at least one external electronic device 230, from the first electronic device 310 to the second electronic device 320.

According to an embodiment, the processor 460 of the second electronic device 320 may identify whether exchange of the plurality of other UWB signals is necessary. For example, the processor 460 may identify whether the exchange of the plurality of other UWB signals is necessary while identifying (e.g., sniffing) the plurality of UWB signals. The processor 460 may transmit a second signal to the first electronic device 310, based on identifying that exchange of the plurality of other UWB signals is required.

According to an embodiment, the processor 410 of the first electronic device 310 may receive the second signal from the second electronic device 320. The processor 410 may cease exchanging the UWB signals with the at least one external electronic device 230 based on the second signal.

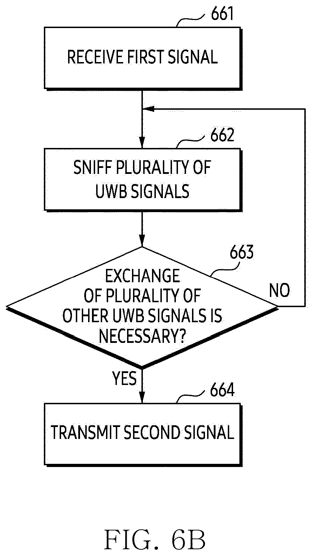

A specific example of operation 495 will be described later in operation 603 of FIG. 6A and operation 664 of FIG. 6B.

In operation 496, the processor 460 of the second electronic device 320 may exchange the plurality of other UWB signals. The processor 460 of the second electronic device 320 may exchange the plurality of other UWB signals with the at least one external electronic device 230 through the first communication circuit 471, based on transmitting the second signal to the first electronic device 310.

According to an embodiment, the processor 410 of the first electronic device 310 may identify at least a portion of the plurality of other UWB signals. For example, the processor 410 may sniff at least a portion of the plurality of other UWB signals exchanged between the second electronic device 320 and the at least one external electronic device 230.

According to an embodiment, a service according to a location of a user of the first electronic device 310 and the second electronic device 320 may be provided based on a ranging operation through the first electronic device 310 and/or the second electronic device 320. After the service according to the location of the user is completed, the first electronic device 310 and the second electronic device 320 may cease performing the ranging operation. According to an embodiment, when the first electronic device 310 is performing the ranging operation, the processor 410 of the first electronic device 310 may cease performing of the ranging operation, based on identifying that the service according to the location of the user is completed. According to an embodiment, when the second electronic device 320 is performing the ranging operation, the processor 460 of the second electronic device 320 may cease performing of the ranging operation, based on identifying that the service according to the location of the user is completed.

FIG. 5 is a flowchart illustrating an operation of a first electronic device, according to an embodiment.

Referring to FIG. 5, in operation 510, the processor 410 of the first electronic device 310 may establish a connection with the second electronic device 320. For example, the processor 410 may establish a Bluetooth communication (or BLE communication) connection with the second electronic device 320 by using the second communication circuit 422. For example, the processor 410 may establish a wireless local area network (WLAN) communication connection with the second electronic device 320 by using the second communication circuit 422. The Bluetooth communication and the WLAN communication are exemplary, and the processor 410 may establish a communication connection with the second electronic device 320, based on various RAT, by using the second communication circuit 422.

According to an embodiment, the first electronic device 310 and the second electronic device 320 may be used by the same user. For example, the first electronic device 310 may be used to control the second electronic device 320.

In operation 520, the processor 410 may identify whether the same service is registered in the first electronic device 310 and the second electronic device 320. For example, the processor 410 may identify whether the same service is registered in the first electronic device 310 and the second electronic device 320 based on establishing a connection with the second electronic device 320. For example, the service may refer to a service according to a location of a user possessing the first electronic device 310 and the second electronic device 320 (or the location of the first electronic device 310 and the second electronic device 320). For example, the service may include a service for unlocking a vehicle based on a location of a user possessing the first electronic device 310 and the second electronic device 320. For example, the service may include a service performing user authentication based on the location of the user possessing the first electronic device 310 and the second electronic device 320.

According to an embodiment, operation 520 may be performed in the second electronic device 320. After operation 520 is performed in the second electronic device 320, operation 540 may be performed in the second electronic device 320.

According to an embodiment, the processor 410 may identify whether the same scan filter for controlling an operation with respect to the external object 220 is registered in the second electronic device 320. The processor 410 may identify whether the same service is registered in the first electronic device 310 and the second electronic device 320, based on identifying whether the same scan filter for controlling an operation with respect to the external object 220 is registered in the second electronic device 320. For example, the processor 410 may identify that the same service is registered in the first electronic device 310 and the second electronic device 320, based on identifying that a key (e.g., a root key and/or a security key) for controlling an operation with respect to the same external object 220 is registered in the second electronic device 320.

For example, the processor 410 may store identifier information of the external electronic device 230-1 among at least one external electronic device 230 included in the external object 220 to control an operation with respect to the external object 220. The processor 410 may identify whether identifier information of the external electronic device 230-1 among the at least one external electronic device 230 included in the external object 220 is stored, for a service for controlling an operation with respect to the external object 220, in the second electronic device 320.

For example, the processor 410 may identify whether a scan filter for releasing a lock (e.g., door lock) of the external object 220 is registered in both the first electronic device 310 and the second electronic device 320.

In operation 530, when the same service is not registered in the first electronic device 310 and the second electronic device 320, the processor 410 may exchange a plurality of UWB signals with the at least one external electronic device 230 independently of the second electronic device 320, through the first communication circuit 421. For example, based on identifying that the same service is not registered in the first electronic device 310 and the second electronic device 320, the processor 410 may exchange the plurality of UWB signals with at least one external electronic device 230 independently of the second electronic device 320, through the first communication circuit 421. The processor 410 may exchange the plurality of UWB signals with the at least one external electronic device 230 regardless of an operation of the second electronic device 320, through the first communication circuit 421. For example, the processor 410 may perform UWB ranging by exchanging the plurality of UWB signals with the at least one external electronic device 230, through the first communication circuit 421. It is also indicated that the NO branch of Fig. 5, step 520 is fully optional and in an embodiment in step 520 the processor 410 only determines accordingly that the same service is not registered in the first electronic device 310 and the second electronic device 320.

In operation 540, when the same service is registered in the first electronic device 310 and the second electronic device 320, the processor 410 may determine a device to perform the BLE scan operation as the first electronic device 310. For example, the processor 410 may determine a device to perform the BLE scan operation as the first electronic device 310, based on identifying that the same service is registered in the first electronic device 310 and the second electronic device 320.

For example, the processor 410 may determine a device with a short period (e.g., a scan duty cycle) for performing a scan as a device to perform the BLE scan operation. For example, based on identifying that a period for performing a scan in the first electronic device 310 is shorter than a period for performing a scan in the second electronic device 320, the processor 410 may determine a device to perform the BLE scan operation as the first electronic device 310.

For example, the processor 410 may determine a device having a larger remaining battery capacity as a device to perform the BLE scan operation based on remaining battery capacity. For example, based on identifying that a remaining battery capacity of the first electronic device 310 is larger than a remaining battery capacity of the second electronic device 320, the processor 410 may determine a device to perform the BLE scan operation as the first electronic device 310.

According to an embodiment, the processor 410 may determine to perform the BLE scan operation for receiving a BLE advertisement message by using one of the first electronic device 310 and the second electronic device 320. For example, based on the number of external devices connected to the first electronic device 310 and the number of external devices connected to the second electronic device 320, the processor 410 may determine a device to perform the BLE scan operation as the first electronic device 310 of the first electronic device 310 and the second electronic device 320. For example, based on a duty cycle for the BLE scan of the first electronic device 310 and a duty cycle for the BLE scan of the second electronic device 320, the processor 410 may determine a device to perform the BLE scan operation as the first electronic device 310 of the first electronic device 310 and the second electronic device 320. For example, based on remaining battery capacity of the first electronic device 310 and remaining battery capacity of the second electronic device 320, the processor 410 may determine a device to perform the BLE scan operation as the first electronic device 310 of the first electronic device 310 and the second electronic device 320.

According to an embodiment, the processor 410 may determine a device to perform the BLE scan operation as at least one of the first electronic device 310 and the second electronic device 320. For example, the processor 410 may set both the first electronic device 310 and the second electronic device 320 to perform the BLE scan operation in order to quickly identify the external object 220. For example, when both the first electronic device 310 and the second electronic device 320 perform the BLE scan operation, a device that preferentially receives the BLE advertisement message may perform the following operations (e.g., operations 550 to 600).

In operation 550, the processor 410 may identify the external object 220 including at least one external electronic device 230. For example, the processor 410 may identify an external object 220 located around the first electronic device 310 based on the BLE scan operation through the second communication circuit 422. For example, the processor 410 may identify the external object 220 located around the first electronic device 310, based on receiving the BLE advertisement message from the external object 220 (e.g., the external electronic device 230-1).

According to an embodiment, the processor 410 may transmit information indicating that the external object 220 located around the first electronic device 310 is identified, to the second electronic device 320 through the second communication circuit 422.

According to an embodiment, based on the BLE scan operation through the second communication circuit 422, the processor 410 may receive the BLE advertisement message transmitted from the external electronic device 230-1 among at least one external electronic device 230 included in the external object 220. The processor 410 may identify the external object 220 based on the BLE advertisement message. For example, the processor 410 may perform the BLE scan operation through the second communication circuit 422. The processor 410 may identify the external object 220, based on receiving the BLE advertisement message transmitted from the external electronic device 230-1 among the at least one external electronic device 230, by using the second communication circuit 422. The processor 410 may establish a BLE communication connection with the external electronic device 230-1 included in the external object 220 based on the BLE advertisement message.

In FIG. 5, an example in which the first electronic device 310 is determined as a device to perform the BLE scan operation is illustrated, but it is not limited thereto. When both the first electronic device 310 and the second electronic device 320 perform the BLE scan operation, a device preferentially received the BLE advertisement message may establish the BLE communication connection with the external electronic device 230-1.

In operation 560, the processor 410 may identify whether the first security key and the second security key are equally configurable. The processor 410 may identify whether the first security key with respect to the first electronic device 310 and the second security key for the second electronic device 320 used for UWB communication may be identically set. For example, the first security key or the second security key may be used for scrambled timestamp sequence (STS) of UWB signals and payload encryption.

According to an embodiment, the processor 410 may identify whether the first electronic device 310 and the second electronic device 320 obtain the same root key through an owner pairing operation. When the first electronic device 310 and the second electronic device 320 obtain the same root key, the first security key and the second security key may be identically set. For example, the processor 410 may obtain the first security key by using the root key and at least one parameter with respect to UWB communication. The processor 410 may transmit at least one parameter to the second electronic device 320. The second electronic device 320 may obtain the second security key by using the root key and at least one parameter received from the first electronic device 310. When the first electronic device 310 and the second electronic device 320 obtain the same root key from a server or the external electronic device 230-1, the first security key and the second security key may be identically set.

According to an embodiment, a high security level may be required to provide a service for controlling an operation of the external object 220. For example, the processor 410 of the first electronic device 310 may perform a secure ranging operation with at least one external electronic device 230 included in the external object 220. For example, in the secure ranging operation, a fixed key value may not be used, but a key value through signal exchange between electronic devices may be used, in order to obtain the first security key (e.g., UWB ranging secret key (URSK)) or a session key, which is an initial value for generating derivation keys used for scrambled timestamp sequence (STS) and payload encryption included in the UWB signal (or UWB frame). For example, the processor 410 may obtain the root key through a BLE communication connection. The processor 410 may obtain the first security key through the root key. The first security key may be used for scrambled timestamp sequence (STS) and payload encryption. The processor 410 may obtain a derived URSK (dURSK) by using the first security key. The processor 410 may encrypt the STS using the dURSK.

For example, the processor 410 may obtain a root key having control authority with respect to the external object 220 based on the owner pairing operation for controlling the external object 220. For example, the processor 410 may obtain the root key in the provisioning step. The processor 410 may identify whether the first security key and the second security key are equally configurable, by identifying whether the first electronic device 310 and the second electronic device 320 obtain the same root key. The first security key and the second security key may be referred to as the URSK or the session key.

In operation 570, when the first security key and the second security key may be set equally, the processor 410 may exchange the plurality of UWB signals according to a first period through the first communication circuit 421.

In operation 580, the processor 410 may control the second electronic device 320 to sniff at least a portion of the plurality of UWB signals. For example, the processor 410 may transmit a first signal for causing the second electronic device 320 to sniff at least a portion of the plurality of UWB signals. For example, the processor 410 may transmit the first signal to the second electronic device 320. The second electronic device 320 may sniff at least a portion of the plurality of UWB signals based on the first signal. Although operations 570 and 580 are illustrated to be performed sequentially, operations 570 and 580 may be performed simultaneously, or operations 580 may be performed earlier than operation 570.

For example, the processor 410 may control the second electronic device 320 to sniff the plurality of UWB signals. For example, based on identifying that the first security key and the second security key are equally configurable, the processor 410 may control the second electronic device 320 to sniff at least a portion of the UWB signals exchanged between the first electronic device 310 and at least one external electronic device 230. A specific operation of the first electronic device 310 and the second electronic device 320 according to operations 570 and 580 will be described in FIGS. 6A to 8.

In operation 590, when the first security key and the second security key cannot be set the same, the processor 410 may exchange the plurality of UWB signals according to the first period, through the first communication circuit 421.

In operation 600, the processor 410 may control the second electronic device 320 to exchange the plurality of other UWB signals according to the second period. Although operations 590 and 600 are illustrated to be performed sequentially, operations 590 and 600 may be performed simultaneously, or operations 600 may be performed earlier than operation 590.

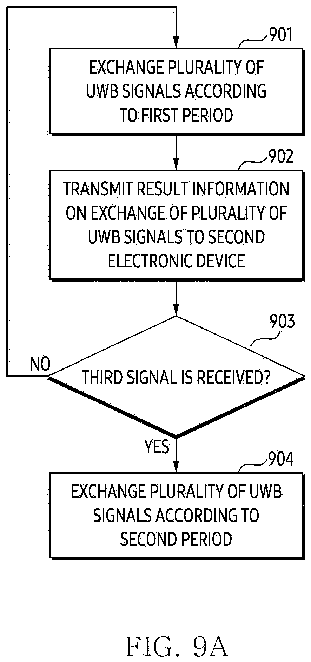

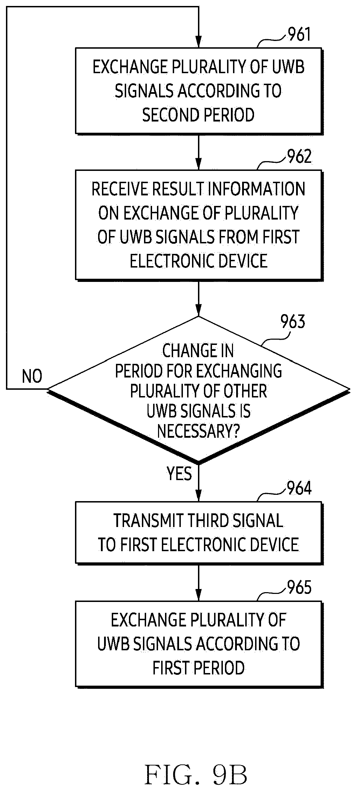

For example, the processor 410 may control the second electronic device 320 so that the second electronic device 320 exchanges the plurality of other UWB signals with the at least one external electronic device 230. For example, the processor 410 may control the second electronic device 320 to exchange the plurality of other UWB signals with the at least one external electronic device 230, based on identifying that the first security key and the second security key cannot be set the same. A specific operation of the first electronic device 310 and the second electronic device 320 according to operations 590 and 600 will be described in FIGS. 9A and 9B. It is also indicated that the NO branch of Fig. 5, step 560 is fully optional and in an embodiment in step 560 the processor 410 only determines accordingly that the first security key and the second security key are equally configurable.

According to an embodiment, operations 520 to 600 illustrated in FIG. 5 may be performed in various situations as well as operation 510. For example, based on identifying that at least one of the first security key (or a root key to obtain the first security key) and the second security key (or a root key to obtain the second security key) is deleted, the processor 410 may perform operations 520 to 600.

FIG. 6A is a flowchart illustrating an operation of a first electronic device according to a claimed embodiment.

FIG. 6B is a flowchart illustrating an operation of a second electronic device according to an embodiment.

Operations 601 to 606 of FIG. 6A and operations 661 to 666 of FIG. 6B may be related to operations 570 and 580 of FIG. 5. The processor 410 of the first electronic device 310 may perform operations 601 to 606, based on identifying that the first security key and the second security key are equally configurable. The processor 460 of the second electronic device 320 may perform operations 661 to 666, based on identifying that the first security key and the second security key are equally configurable.

Referring to FIG. 6A, in operation 601, the processor 410 of the first electronic device 310 transmits the first signal through the second communication circuit 422. For example, the processor 410 may transmit the first signal including at least one parameter for UWB communication to the second electronic device 320, through the second communication circuit 422. The coordination of UWB communication between the first electronic device (310) and the second electronic device (320) is aimed at preventing collisions between UWB signals and increasing performance, based on limiting the number of electronic devices participating in UWB ranging.

According to an embodiment, the processor 410 may establish (or generate) a session for UWB communication with the at least one external electronic device 230, through the first communication circuit 421. For example, the processor 410 may exchange at least one parameter for UWB communication with the external electronic device 230-1, through BLE communication. The processor 410 may obtain at least one parameter through the BLE communication. The processor 410 may establish (or generate) a session for UWB communication, through the first communication circuit 421 based on at least one parameter.

According to an embodiment, the processor 410 may transmit the first signal including at least one parameter to the second electronic device 320, by using RAT other than UWB communication. For example, the processor 410 may transmit the first signal including at least one parameter to the second electronic device 320, by using the BLE communication, through the second communication circuit 422.

According to an embodiment, the processor 410 of the first electronic device 310 may transmit the first signal including at least one parameter, through the first communication circuit 421.

In operation 602, the processor 410 exchanges the plurality of UWB signals with the at least one external electronic device 230. For example, the processor 410 may exchange the plurality of UWB signals with the at least one external electronic device 230, by using the first communication circuit 412. For example, the processor 410 may perform UWB ranging by exchanging the plurality of UWB signals.

For example, the processor 410 may transmit a first UWB signal (e.g., a pre-poll message or a ranging control message (RCM)) and a second UWB signal (e.g., a poll message or a ranging initiation message (RIM)) to the at least one external electronic device 230, through the first communication circuit 421. In response to the second UWB signal, the processor 410 may receive third UWB signals (e.g., a response message or a ranging response message (RRM)) from each of the at least one external electronic device 230, through the first communication circuit 421. The processor 410 may transmit a fourth UWB signal (e.g., a final message or a ranging final message (RFM)) and a fifth UWB signal (e.g., a final_data message or a measurement report message (MRM)) to the at least one external electronic device 230, through the first communication circuit 421. The at least one external electronic device 230 may perform UWB ranging based on UWB signals transmitted and received with the first electronic device 310. The at least one external electronic device 230 may identify a location of the first electronic device 310 (or a location of a user possessing the first electronic device 310) based on UWB ranging.

According to an embodiment, the exchange of the plurality of UWB signals may be performed based on a designated time interval (or the first period). The processor 410 may repeatedly exchange the plurality of UWB signals through the first communication circuit 421 according to the designated time interval (or the first period). For example, the processor 410 may perform UWB ranging, based on the designated time interval (or the first period), through the first communication circuit 421.

According to an embodiment, the processor 410 may control the second electronic device 320 to identify (e.g., sniff) at least a portion of the plurality of UWB signals between the first electronic device 310 and the at least one external electronic device 230, by transmitting the first signal including at least one parameter to the second electronic device 320 through the second communication circuit 422. For example, controlling the processor 410 through the first signal may indicate causing an operation of the second electronic device 320 through the first signal. The processor 410 may cause the second electronic device 320 to identify (e.g., sniff) at least a portion of the plurality of UWB signals between the first electronic device 310 and the at least one external electronic device 230, by transmitting the first signal to the second electronic device 320.

For example, the processor 410 may transmit and receive the plurality of UWB signals with the at least one external electronic device 230, based on the first security key (e.g., URSK or session key) through the first communication circuit 421. The processor 410 may transmit the first signal including at least one parameter to the second electronic device 320 through the second communication circuit 422 so that the second electronic device 320 obtains the second security key set equal to the first security key. The second electronic device 320 may establish (or generate) a session for UWB communication with the at least one external electronic device 230, by using the second security key set equal to the first security key. For example, the second electronic device 320 may use a session for UWB communication between the first electronic device 310 and the at least one external electronic device 230, by using the second security key set equal to the first security key.

For example, the second electronic device 320 may identify (e.g., sniff) at least a portion of the UWB signals between the first electronic device 310 and the at least one external electronic device 230, based on establishing a session for UWB communication with at least one external electronic device 230.

According to an embodiment, the processor 410 may identify whether a service according to a location of a user possessing the first electronic device 310 and the second electronic device 320 is completed (or terminated). The processor 410 may identify whether the service is completed by identifying whether an operation of the external object 220 according to the location of the user possessing the first electronic device 310 and the second electronic device 320 is performed. For example, the at least one external electronic device 230 may identify the location of the user possessing the first electronic device 310 and the second electronic device 320, based on identifying a location of the first electronic device 310. The at least one external electronic device 230 may perform a service according to the location of the user, based on the location of the user. The processor 410 may identify whether the service according to the location of the user is completed. For example, the processor 410 may identify whether the service according to the location of the user is completed, based on receiving information indicating whether the service according to the location of the user is completed, from external objects 220 (e.g., the external electronic device 230-1).

For example, when the external object 220 is a vehicle, as the first electronic device 310 approaches a door of the external object 220, a lock arranged on the door of the external object 220 may be released. The processor 410 may identify that a service according to a location of the first electronic device 310 is completed, based on identifying that the lock is released.

For example, when the service according to the location of the user (or the location of the first electronic device 310) is completed, the processor 410 may terminate the service according to the location of the user. For example, the processor 410 may terminate the service based on identifying that the service according to the location of the user is completed. For example, processor 410 may terminate UWB ranging based on identifying that the service according to the location of the user is completed. The processor 410 may terminate exchanging the plurality of UWB signals, based on identifying that the service according to the location of the user is completed.

In operation 603, the processor 410 identifies whether the second signal is received. For example, the processor 410 may identify whether the second signal is received, while exchanging the plurality of UWB signals with the at least one external electronic device 230. For example, the processor 410 may identify whether the second signal is received, based on identifying that the service according to the location of the user is not completed.

According to an embodiment, the processor 410 may identify whether a second signal, to request the second electronic device 320 to exchange the plurality of other UWB signals with at least one external electronic device 230, is received from the second electronic device 320 through the first communication circuit 421 or the second communication circuit 422. For example, the second signal may be a signal requesting a change in a device to perform UWB ranging with at least one external electronic device 230, from the first electronic device 310 to the second electronic device 320. For example, the second signal may be a signal for causing change in a device to perform UWB ranging with the at least one external electronic device 230 from the first electronic device 310 to the second electronic device 320. For example, the second signal may include information on the number of UWB signals identified by the second electronic device 320.

According to an embodiment, when the second signal is not received, the processor 410 may perform operation 602. For example, the processor 410 may perform operation 602 based on identifying that the second signal is not received. Consequently, the NO branch of step 603 is optional and in step 603 the processor 410 determines that the second signal has been received.

In operation 604, when the second signal is received, the processor 410 ceases exchanging the plurality of UWB signals. The processor 410 may cease exchanging the plurality of UWB signals, based on identifying that the second signal is received.

According to an embodiment, the processor 410 may stop exchanging a plurality of UWB signals. After ceasing exchanging the plurality of UWB signals, the processor 410 may sniff (or identify) the plurality of other UWB signals between the at least one external electronic device 230 and the second electronic device 320, through the first communication circuit 421. For example, the processor 410 may change a device to perform UWB ranging from the first electronic device 310 to the second electronic device 320.

Referring to FIG. 6B, in operation 661, the processor 460 of the second electronic device 320 may receive the first signal through the second communication circuit 472. For example, the processor 460 may receive the first signal including at least one parameter for UWB communication from the first electronic device 310 through the second communication circuit 472.

According to an embodiment, the first signal may be used to control the second electronic device 320 to identify (or sniff) at least a portion of the plurality of UWB signals between the first electronic device 310 and the at least one external electronic device 230.

For example, the first electronic device 310 may transmit a first signal including at least one parameter so that the second electronic device 320 obtains a second security key set equal to the first security key, to the second electronic device 320 through the second communication circuit 422. The processor 460 may establish (or generate) a session for UWB communication with the at least one external electronic device 230, through the first communication circuit 471, by using the second security key set equal to the first security key. The processor 460 may sniff (or identify) at least a portion of the UWB signals between the first electronic device 310 and the at least one external electronic device 230, based on establishing the session for UWB communication with the at least one external electronic device 230. For example, since the STS of the UWB signal is different and the payload is encrypted, the processor 460 may sniff UWB signals, by setting the second security key (e.g., URSK) of the second electronic device 320 to be the same as the first security key (e.g., URSK) of the first electronic device 310.

For example, the processor 460 may activate the first communication circuit 471 of the second electronic device 320 to sniff at least a portion of the UWB signals between the first electronic device 310 and the at least one external electronic device 230.

According to an embodiment, the processor 460 may receive the first signal including at least one parameter from the first electronic device 310, by using RAT other than UWB communication. For example, the processor 460 may receive the first signal including at least one parameter from the first electronic device 310, by using BLE communication through the second communication circuit 472.

In operation 662, the processor 460 may sniff the plurality of UWB signals through the first communication circuit 471. For example, while the first electronic device 310 exchanges the plurality of UWB signals, the processor 460 may sniff at least a portion of the plurality of UWB signals exchanged between the first electronic device 310 and the at least one external electronic device 230, through the first communication circuit 471. For example, the processor 460 may sniff a first UWB signal (e.g., the pre-poll message or the ranging control message (RCM)), a third UWB (e.g., the response message or the ranging response message (RRM)) signal, and a fifth UWB signal (e.g., the final_data message or the measurement report message (MRM)) among the plurality of UWB signals.

According to an embodiment, the processor 460 may identify whether a service according to a location of a user possessing the first electronic device 310 and the second electronic device 320 is completed. Based on a signal indicating whether the service according to the location of the user (or a location of the first electronic device 310) received from the first electronic device 310 is completed, the processor 460 may identify whether the service according to the location of the user is completed.

For example, based on receiving information indicating that the service according to the location of the user is completed from external objects 220 (e.g., external electronic devices 230-1), the processor 410 of the first electronic device 310 may identify that the service according to the location of the user is completed. The processor 410 of the first electronic device 310 may transmit information indicating that the service according to the location of the user is completed to the second electronic device 320. The processor 460 of the second electronic device 320 may identify that the service according to the location of the user is completed. According to an embodiment, the processor 460 may receive information indicating that the service according to the user's location and transmitted to the first electronic device 310 is completed, from the external object 220 (e.g., the external electronic device 230-1).

According to an embodiment, when the service according to the location of the user is completed, the processor 410 may terminate the service according to the location of the user. For example, the processor 410 may terminate the service according to the location of the user, based on identifying that the service according to the location of the user is completed.

According to an embodiment, the processor 410 may cease sniffing the plurality of UWB signals, based on identifying that the service according to the location of the user is completed. The processor 460 may identify that the exchange of the plurality of UWB signals in the first electronic device 310 is terminated, based on identifying that the service according to the location of the user is completed. Accordingly, the processor 460 may cease sniffing the plurality of UWB signals through the first communication circuit 471.

In operation 663, the processor 460 may identify whether exchange of the plurality of other UWB signals is necessary. For example, the processor 460 may identify whether the exchange of the plurality of other UWB signals is necessary, while sniffing the plurality of UWB signals. For example, the processor 460 may identify whether the exchange of the plurality of other UWB signals is necessary, based on identifying that the service according to the location of the user is not completed.

For example, the processor 410 may identify whether the exchange of the plurality of other UWB signals with the at least one external electronic device 230 is necessary, based on sniffing the plurality of UWB signals. For example, the processor 410 may identify whether the second electronic device 320 should perform UWB ranging with the at least one external electronic device 230.

For example, the processor 460 may identify the first number of a portion of the third UWB signals (e.g., the response message or the ranging response message (RRM)) identified in the first electronic device 310, based on the fifth UWB signal (e.g., the final_data message or the measurement report message (MRM)). The processor 460 may identify that the first number is less than the second number of a portion of the third UWB signals identified by the second electronic device 320. Based on identifying that the first number is less than the second number, the processor 460 may identify that the exchange of the plurality of UWB signals is required.

According to an embodiment, when the exchange of the plurality of UWB signals is not required, the processor 460 may perform operation 662. For example, the processor 460 may perform operation 662, based on identifying that the exchange of the plurality of UWB signals is not required. Consequently, the NO branch of step 663 is optional and in step 663 the processor 460 determines that the exchange of the plurality of other UWB signals with the at least one external electronic device 230 is necessary.

In operation 664, when the exchange of the plurality of UWB signals is required, the processor 460 may transmit the second signal. For example, based on identifying that the exchange of the plurality of UWB signals is required, the processor 460 may transmit the second signal to the first electronic device 310 through the first communication circuit 471 or the second communication circuit 472.

For example, the processor 460 may transmit the second signal to request that the second electronic device 320 exchanges the plurality of other UWB signals with at least one external electronic device 230, to the first electronic device 310. The processor 460 may exchange the plurality of other UWB signals with at least one external electronic device 230 through the first communication circuit 471, based on transmitting the second signal to the first electronic device 310 through the second communication circuit 472.

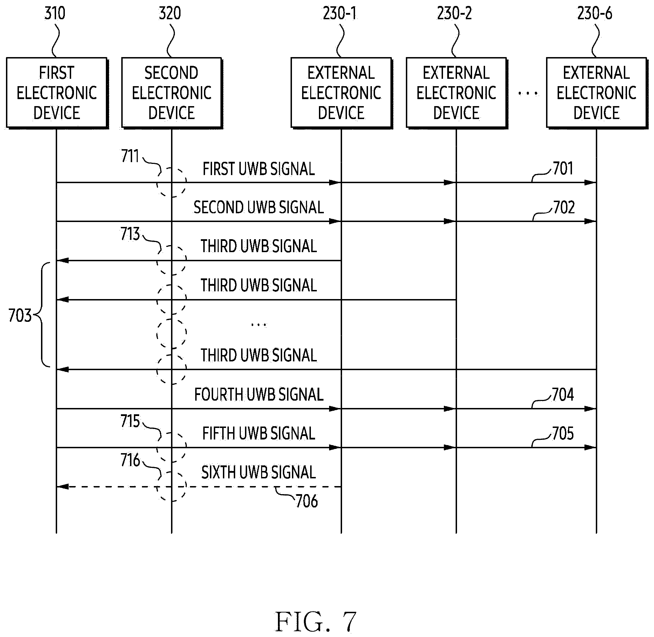

FIG. 7 illustrates a signal flowchart between a first electronic device, a second electronic device, and at least one external electronic device, according to an embodiment.

Referring to FIG. 7, the processor 410 of the first electronic device 310, the processor 460 of the second electronic device 320, and each of the processors of at least one external electronic device 230 may transmit and receive a signal. For convenience of explanation, an operation in which the processor 410 of the first electronic device 310 transmits a signal (e.g., UWB signal) may be described as an operation in which the first electronic device 310 transmits a signal through a communication circuit (e.g., the first communication circuit 421 or the second communication circuit 422). An operation in which the processor 460 of the second electronic device 320 transmits a signal (e.g., UWB signal) may be described as an operation in which the second electronic device 320 transmits a signal through a communication circuit (e.g., the first communication circuit 471 or the second communication circuit 472). An operation in which each of the processors of the at least one external electronic device 230 transmits a signal may be described as an operation in which each of the at least one external electronic device 230 transmits a signal through a communication circuit.

Although FIG. 7 illustrates that the first electronic device 310 transmits and receives all of the first UWB signal to the fifth UWB signal (or the sixth UWB signal), it is not limited thereto. The processor 410 of the first electronic device 310 may only transmit and receive at least a portion of the first UWB signal to the fifth UWB signal (or the sixth UWB signal). The processor 410 may transmit and receive only the at least a portion of the first UWB signal to the fifth UWB signal (or the sixth UWB signals), based on activating (e.g., rx open) or deactivating (e.g., rx close) the first communication circuit 421.

In operation 701, the first electronic device 310 may transmit a first UWB signal to at least one external electronic device 230. The first electronic device 310 may transmit the first UWB signal to the at least one external electronic device 230, by broadcasting (or multicasting) the first UWB signal. For example, the first UWB signal may be referred to as a pre-poll message or a ranging control message (RCM). For example, the first UWB signal may obtain control information on the first process (e.g., the ranging round or ranging operation). The first UWB signal may include information for synchronization of the UWB signals.

In operation 711, the second electronic device 320 may sniff the first UWB signal. The second electronic device 320 may sniff the first UWB signal for a recovery operation or synchronization of the UWB signals.

In operation 702, the first electronic device 310 may transmit the second UWB signal to the at least one external electronic device 230. The first electronic device 310 may transmit the second UWB signal to the at least one external electronic device 230, by broadcasting (or multicasting) the second UWB signal. For example, the second UWB signal may be referred to as a poll message or a ranging initiation message (RIM). For example, the second UWB signal may include information for indicating the start of the first process (e.g., the ranging round or ranging operation).

In operation 703, the first electronic device 310 may receive the third UWB signals from each of the at least one external electronic device 230. The first electronic device 310 may receive the third UWB signals from each of the at least one external electronic device 230, in response to the second UWB signal. For example, the third UWB signals may be referred to as a response message or a ranging response message (RRM). For example, the at least one external electronic device 230 may include an external electronic device 230-1 to an external electronic device 230-6. For example, the first electronic device 310 may receive the third UWB signal from the external electronic device 230-1. Similarly, the first electronic device 310 may receive the third UWB signals from the external electronic device 230-2 to the external electronic device 230-6.

According to an embodiment, the first electronic device 310 may not receive all of the third UWB signals. The first electronic device 310 may receive at least a portion of the third UWB signals. The first electronic device 310 may identify an external electronic device transmitting at least a portion of the received third UWB signals.

In operation 713, the second electronic device 320 may sniff the third UWB signals. The second electronic device 320 may identify the at least a portion of the third UWB signals transmitted from the at least one external electronic device 230. The second electronic device 320 may identify the second number of the at least a portion of the third UWB signals. The second electronic device 320 may identify information on signal quality of the third UWB signals.

According to an embodiment, the first electronic device 310 may transmit information on the quality of the third UWB signals to the second electronic device 320. The second electronic device 320 may obtain information on the quality of the third UWB signals from the first electronic device 310. According to an embodiment, the first electronic device 310 may transmit a signal including information on the quality of the third UWB signals to the at least one external electronic device 230. The second electronic device may obtain information on the quality of the third UWB signals by sniffing the signal including information on the quality of the third UWB signals.

In operation 704, the first electronic device 310 may transmit the fourth UWB signal to the at least one external electronic device 230. The first electronic device 310 may transmit a fourth UWB signal to at least one external electronic device 230, by broadcasting (or multicasting) the fourth UWB signal. For example, the fourth UWB signal may be referred to as a final message or a ranging final message (RFM).

In operation 705, the first electronic device 310 may transmit a fifth UWB signal to the at least one external electronic device 230. The first electronic device 310 may transmit the fifth UWB signal to the at least one external electronic device 230, by broadcasting (or multicasting) the fifth UWB signal. For example, the fifth UWB signal may be referred to as a final_data message or a measurement report message (MRM). For example, the fifth UWB signal may include information on at least a portion of the third UWB signals identified by the first electronic device 310. For example, the processor 410 may include status information and/or timestamp information on the at least a portion of the third UWB signals.

In operation 715, the second electronic device 320 may sniff the fifth UWB signal. The second electronic device 320 may sniff the fifth UWB signal to identify the first number of at least a portion of the third UWB signals identified in the first electronic device 310. For example, the second electronic device 320 may identify the at least a portion of the third UWB signals identified in the first electronic device 310, based on the fifth UWB signal. The second electronic device 320 may identify the first number of the at least a portion of the third UWB signals identified in the first electronic device 310. The second electronic device 320 may compare a second number of at least a portion of the third UWB signals identified in the second electronic device 320 with the first number.

In operation 706, the first electronic device 310 may receive the sixth UWB signal from the external electronic device 230-1. For example, the sixth UWB signal may be referred to as a ranging result report message (RRRM). For example, the sixth UWB signal may include information on a location of the first electronic device 310. For example, the sixth UWB signal may include information on a relative location of the first electronic device 310 with respect to an external object including the at least one external electronic device 230. The first electronic device 310 may identify a location of the first electronic device 310 identified by the at least one external electronic device 230, based on the sixth UWB signal.

In operation 716, the second electronic device 320 may sniff the sixth UWB signal. The second electronic device 320 may identify the location of the first electronic device 310 based on the sixth UWB signal. The second electronic device 320 may identify a relative location of the first electronic device 310 with respect to the external object 220, based on the sixth UWB signal.

Operation 706 and operation 716 may be omitted according to an embodiment. According to an embodiment, the external electronic device 230-1 may transmit a signal corresponding to the sixth UWB signal to the first electronic device 310, by using RAT (e.g., BLE communication) distinct from UWB communication.

According to an embodiment, the second electronic device 320 may sniff only the first UWB signal, the third UWB signal, and the fifth UWB signal among the plurality of UWB signals. According to an embodiment, when the sixth UWB signal is transmitted, the second electronic device 320 may sniff only the first UWB signal, the third UWB signals, the fifth UWB signal, and the sixth UWB signal among the plurality of UWB signals. The second electronic device 320 may reduce power consumption by sniffing only a portion of the plurality of UWB signals. For example, the power consumption of the second electronic device 320 when only a portion of the plurality of UWB signals are sniffed may be reduced by half compared to power consumption when sniffing all of the plurality of UWB signals.

According to an embodiment, the external object 220 may be a vehicle. The at least one external electronic device 230 included in the external object 220 may be disposed inside the vehicle and in a bumper. Therefore, it may be difficult for both the first electronic device 310 and at least one external electronic device 230 to secure a line of sight (LoS). According to a location of the first electronic device 310 or a state in which the first electronic device 310 is gripped, the first electronic device 310 may not receive the third UWB signals transmitted from a portion of the at least one external electronic device 230. Accordingly, the second electronic device 320 may identify the first number of at least a portion of the third UWB signals identified in the first electronic device 310. The second electronic device 320 may compare a second number of at least a portion of the third UWB signals identified in the second electronic device 320 with the first number. The second electronic device 320 may transmit a second signal for requesting to perform the second process to the first electronic device 310, based on identifying that the first number is less than the second number. For example, the second electronic device 320 may transmit the second signal to the first electronic device 310, by using UWB communication or RAT (or out of band (OOB)) distinct from the UWB communication. For example, when the second signal is transmitted through UWB communication, the first electronic device 310 may maintain the activation of the first communication circuit 421 even after transmitting the fifth UWB signal (or the sixth UWB signal). The first electronic device 310 may maintain the activation of the first communication circuit 421 to receive the second signal.

According to an embodiment, the second electronic device 320 may not transmit the second signal based on identifying that the first number is greater than or equal to the second number. According to an embodiment, based on identifying that the first number is greater than or equal to the second number, the second electronic device 320 may transmit a signal indicating that the second process will not be performed to the first electronic device 310. The second electronic device 320 may perform the second process based on the second signal. The first electronic device 310 may cease the first process, based on the second signal. The first electronic device 310 may sniff the plurality of other UWB signals according to the second process, based on the second signal. In other words, a device for performing a ranging operation with at least one external electronic device 230 may be changed from the first electronic device 310 to the second electronic device 320.

According to an embodiment, when the first electronic device 310 receives the sixth UWB signal, the first electronic device 310 may identify a relative location of the first electronic device 310 with respect to the external object 220. The second electronic device 320 may also identify the relative location of the first electronic device 310 based on sniffing the sixth UWB signal. Based on identifying that a distance between the first electronic device 310 and the external object 220 is greater than or equal to a first designated distance, the second electronic device 320 may sniff only UWB signals with respect to a portion of a first processes (e.g., ranging block) that are repeated according to the first period. As the distance between the first electronic device 310 and the external object 220 becomes closer, the second electronic device 320 may increase the number of the first processes (e.g., ranging block) for sniffing the UWB signals within a designated time. Based on identifying that the distance between the first electronic device 310 and the external object 220 is less than a second designated distance, the second electronic device 320 may sniff UWB signals with respect to all first processes repeated according to the first period.

According to the above-described embodiment, operations of the first electronic device 310 and the second electronic device 320 may be repeatedly performed until the service is completed (or terminated).

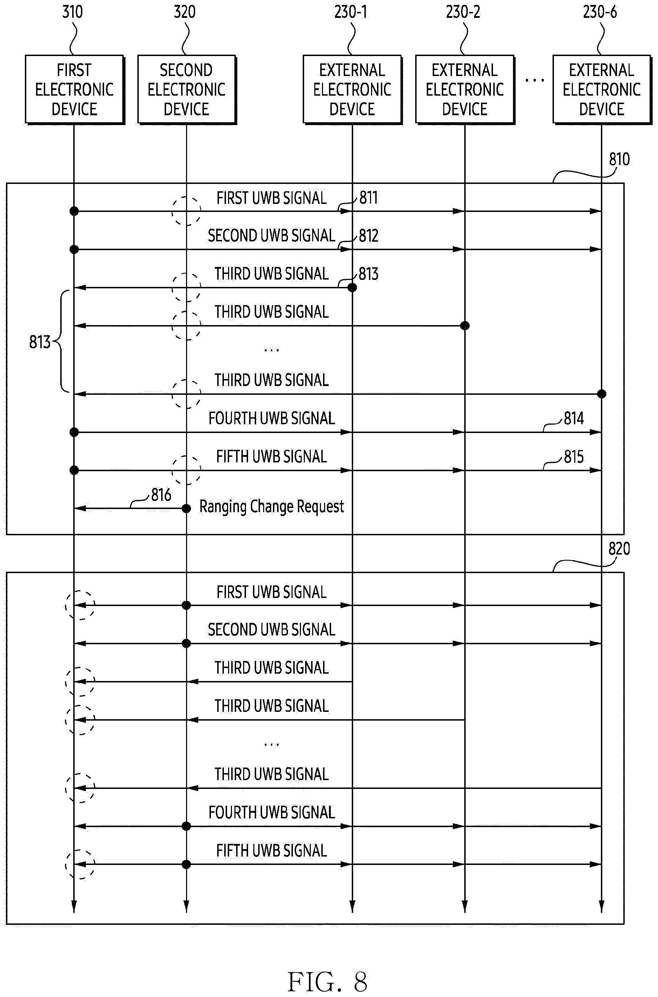

FIG. 8 illustrates a signal flowchart between a first electronic device, a second electronic device, and at least one external electronic device, according to an embodiment.

Referring to FIG. 8, in the first ranging block 810, the first electronic device 310 and the at least one external electronic device 230 may exchange the plurality of UWB signals. For example, the plurality of UWB signals may include a first UWB signal 811, a second UWB signal 812, a third UWB signals 813, a fourth UWB signal 814, and a fifth UWB signal 815. For example, the first UWB signal 811 may correspond to the first UWB signal 701 of FIG. 7. The second UWB signal 812 may correspond to the second UWB signal 702 of FIG. 7. The third UWB signals 813 may correspond to the third UWB signals 703 of FIG. 7. The fourth UWB signal 814 may correspond to the fourth UWB signal 704 of FIG. 7. The fifth UWB signal 815 may correspond to the fifth UWB signal 705 of FIG. 7.

For example, the first electronic device 310 may identify at least a portion of the third UWB signals 813. Although, the third UWB signals 813 are transmitted from each of the at least one external electronic device 230 to the first electronic device 310, the first electronic device 310 may receive at least a portion of the third UWB signals 813. The fifth UWB signal 815 may include information on at least a portion of the third UWB signals identified by the first electronic device 310.

According to an embodiment, the at least one external electronic device 230 (e.g., the external electronic device 230-1) may identify a location of the first electronic device 310, based on the plurality of UWB signals.

The second electronic device 320 may identify (e.g., sniff) at least a portion of the plurality of UWB signals. The second electronic device 320 may identify (e.g., sniffing) the first UWB signal 811, at least a portion of the third UWB signal 813, and the fifth UWB signal 815, among the plurality of UWB signals. The second electronic device 320 may identify the first number of the at least a portion of the third UWB signals identified by the first electronic device 310 based on the fifth UWB signal 815. The second electronic device 320 may identify the second number of the at least a portion of the third UWB signals identified by the second electronic device 320. According to an embodiment, the second electronic device 320 may receive information on the first number, by using an out-of-band (OOB) (e.g., BLE communication).

According to an embodiment, based on identifying that the first number is less than the second number, the second electronic device 320 may transmit a signal 816 for requesting that the second electronic device 320 exchange the plurality of other UWB signals with the at least one external electronic device 230, to the first electronic device 310. For example, the signal 816 may request that the second electronic device 320 exchange the plurality of other UWB signals with the at least one external electronic device 230. The first electronic device 310 may cease exchanging the at least one external electronic device 230 with the plurality of UWB signals based on the signal 816. For example, the signal 816 may be referred to as a ranging changing request message. For example, the signal 816 may be transmitted last among signals transmitted and received within the first ranging block 810.

According to an embodiment, the signal 816 may be transmitted not only through UWB communication but also through RAT distinct from UWB communication. For example, the signal 816 may be also transmitted through wireless LAN communication.

According to an embodiment, the second electronic device 320 may not transmit the signal 816 to the first electronic device 310, based on identifying the first number and the second number are the same or that the first number is greater than the second number. According to an embodiment, when the first electronic device 310 and the second electronic device 320 do not receive all of the third UWB signals, the second electronic device 320 may transmit the signal 816 to the first electronic device 310. For example, when the first electronic device 310 does not receive all of the third UWB signals, the fifth UWB signal 815 may not be transmitted to the at least one external electronic device 230. For example, the at least one external electronic device 230 may not receive the first UWB signal 811 and the second UWB signal 812. For example, when the first electronic device 310 is located in the user's back pocket, signal attenuation due to the user's body may occur significantly. Accordingly, the at least one external electronic device 230 may not receive the first UWB signal 811 and the second UWB signal 812 transmitted by the first electronic device 310. When the first electronic device 310 does not receive all of the third UWB signals, the second electronic device 320 may transmit the signal 816 to the first electronic device 310. According to an embodiment, the first electronic device 310 may identify that the first electronic device 310 is not in a state suitable for transmitting the first UWB signal 811 and/or the second UWB signal 812. The first electronic device 310 may transmit information indicating that the first electronic device 310 is not in a state suitable for transmitting the first UWB signal 811 and/or the second UWB signal 812. The second electronic device 320 may transmit the signal 816 to the first electronic device 310 based on the information.

According to an embodiment, the second electronic device 320 may receive first information on signal quality (e.g., RSSI, SNR, or LoS) for at least a portion of the third UWB signals identified by the first electronic device 310 from the first electronic device 310. The second electronic device 320 may obtain second information on signal quality of at least a portion of the third UWB signals identified by the second electronic device 320. The second electronic device 320 may transmit the signal 816 to the first electronic device 310, based on the first information and the second information. For example, when the signal quality of the at least a portion of the third UWB signals identified by the second electronic device 320 is better than that of the at least a portion of the third UWB signals identified in the first electronic device 310, the second electronic device may transmit the signal 816 to the first electronic device 310.

According to an embodiment, the at least one external electronic device 230 may identify that the exchange of the plurality of UWB signals is terminated, based on the fifth UWB signal 815. The at least one external electronic device 230 may deactivate a communication circuit for UWB communication, based on receiving the fifth UWB signal. Accordingly, the at least one external electronic device 230 may not receive the signal 816.

After the first ranging block 810 is performed, in the second ranging block 820, the second electronic device 320 and at least one external electronic device 230 may exchange the plurality of other UWB signals. For example, the second ranging block 820 may refer to a ranging block after the first ranging block 810. The second electronic device 320 may exchange the plurality of other UWB signals with at least one external electronic device 230, based on transmitting the signal 816 to the first electronic device 310. The plurality of other UWB signals included in the second ranging block 820 may correspond to the plurality of UWB signals included in the first ranging block 810.

According to an embodiment, the first electronic device 310 may identify (e.g., sniff) at least a portion of the plurality of other UWB signals. The first electronic device 310 may perform the same or similar operations as operations performed by the second electronic device 320 in the first ranging block 810.

Unlike illustrated in FIG. 8, the ranging block 810 may be repeated according to the first period. The second electronic device 320 may identify (e.g., sniff) a portion of the UWB signals among the ranging blocks 810 repeated according to the first period. For example, based on identifying that the first number of at least a portion of the third UWB signals received from the first electronic device 310 is greater than the second number of at least a portion of the third UWB signals received from the second electronic device 320 by a designated number or more, the second electronic device 320 may identify (e.g., sniff) a portion of the UWB signals of the ranging blocks 810 repeated according to the first period. For example, based on identifying that a first value representing the signal quality of at least a portion of the third UWB signals identified by the first electronic device 310 is greater than or equal to a second value representing the signal quality of at least a portion of the third UWB signals received by the second electronic device 320 by a designated number or more, the second electronic device 320 may identify (e.g., sniff) a portion of the UWB signals of the ranging blocks 810 repeated according to the first period.

According to an embodiment, the second electronic device 320 may wait without identifying (e.g., sniffing) the first UWB signal 811 from the start time point of the ranging block 810. For example, the second electronic device 320 may start identifying (e.g., sniffing) the UWB signal, based on receiving a message indicating the identification of the UWB signal from the first electronic device 310. For example, the first electronic device 310 may transmit a message indicating the identification of the UWB signal to the second electronic device 320, based on failure to exchange the plurality of UWB signals with the at least one external electronic device 230. For example, based on identifying that the first number of at least a portion of the third UWB signals identified by the first electronic device 310 is less than the designated number, the first electronic device 310 may transmit a message indicating to identify the UWB signal to the second electronic device 320. For example, based on identifying that the signal quality (e.g., RSSI) of the plurality of UWB signals is less than the designated quality, the first electronic device 310 may transmit a message indicating to identify the UWB signal to the second electronic device 320.

According to an embodiment, based on identifying that the first electronic device 310 fails to exchange a plurality of UWB signals, the second electronic device 320 may transmit a signal 816 requesting that the second electronic device 320 exchange the plurality of other UWB signals with at least one external electronic device, to the first electronic device 310.

According to an embodiment, based on identifying that the plurality of UWB signals are smoothly exchanged with at least one external electronic device 230, the first electronic device 310 may transmit a message to cease identifying the plurality of UWB signals by the second electronic device 320, to the second electronic device 320. The second electronic device 320 may cease identifying (e.g., sniffing) the plurality of UWB signals based on receiving the message.

FIG. 9A is a flowchart illustrating an operation of a first electronic device, according to an embodiment.

FIG. 9B is a flowchart illustrating an operation of a second electronic device, according to an embodiment.

Operations 901 to 906 of FIG. 9A and operations 961 to 967 of FIG. 9B may be related to operations 590 and 600 of FIG. 5. The processor 410 of the first electronic device 310 may perform operations 901 to 906 based on identifying that the first security key and the second security key cannot be set identically. The processor 460 of the second electronic device 320 may perform operations 961 to 967 based on identifying that the first security key and the second security key cannot be set identically.

Referring to FIG. 9A, in operation 901, the processor 410 of the first electronic device 310 may exchange the plurality of UWB signals according to the first period. The processor 410 may control the second electronic device to exchange the plurality of other UWB signals according to the second period. According to an embodiment, the processor 410 of the first electronic device 310 may identify (or determine) a minimum period for exchanging the plurality of other UWB signals in the second electronic device 320. The second electronic device 320 may exchange the plurality of other UWB signals according to the second period, based on the minimum period identified by the first electronic device 310.

According to an embodiment, the processor 410 may perform UWB ranging according to the first period. For example, the processor 410 may perform UWB ranging based on the first time interval. The processor 410 may perform UWB ranging by exchanging the plurality of UWB signals with at least one external electronic device 230. For example, the processor 410 may exchange the plurality of UWB signals in a ranging block repeated according to the first period.

According to an embodiment, the processor 410 may control the second electronic device to exchange the plurality of other UWB signals according to the second period. For example, the processor 410 may control the second electronic device 320 to exchange the plurality of other UWB signals according to the second period (e.g., 288 ms), while exchanging the plurality of UWB signals according to the first period (e.g., 96 ms). For example, the first period may be set shorter than the second period. The first electronic device 310 may exchange the plurality of UWB signals at a higher frequency than the second electronic device 320. The second electronic device 320 may exchange the plurality of other UWB signals at a lower frequency than the first electronic device 310.

According to an embodiment, the first electronic device 310 and the second electronic device 320 may receive a BLE advertisement message received from the external object 220.

The first electronic device 210 may establish a first session with the at least one external electronic device 230, based on receiving the BLE advertisement message. The processor 410 of the first electronic device 310 may perform UWB ranging through the first session. For example, the processor 410 of the first electronic device 310 may exchange the plurality of UWB signals with the at least one external electronic device 230 through the first session.

The second electronic device 210 may establish a second session with the at least one external electronic device 230, based on receiving the BLE advertisement message. The second session may be distinguished from the first session between the first electronic device 310 and the at least one external electronic device 230. The processor 460 of the second electronic device 320 may perform UWB ranging through the second session. For example, the processor 460 of the second electronic device 320 may exchange the plurality of other UWB signals with the at least one external electronic device 230 through the second session.

According to an embodiment, the processor 410 may identify (or determine) a period related to the first session as a first period. The processor 410 may transmit a minimum period related to the second session to the second electronic device 320 through a negotiation process. For example, the minimum period related to the second session may be longer than the first period. The processor 460 of the second electronic device 320 may set a period related to the second session as a second period, based on receiving the minimum period related to the second session.

According to an embodiment, the processor 410 may receive information indicating that the second session has been established from the second electronic device 320. The processor 410 may identify that the second electronic device 320 and at least one external electronic device 230 have established the second session based on the received information.

According to an embodiment, the processor 410 may identify whether a service according to a location of a user possessing the first electronic device 310 and the second electronic device 320 is completed. The processor 410 may identify whether the service is completed by identifying whether an operation of the external object 220 according to the location of the user is performed.

According to an embodiment, when a service according to a location of a user possessing the first electronic device 310 and the second electronic device 320 is completed, the processor 410 may terminate the service according to the location of the user. The processor 410 may terminate the service according to the location of the user, based on identifying that the service according to the location of the user is completed. For example, processor 410 may terminate UWB ranging, based on identifying that the service according to the location of the user is completed.

In operation 902, the processor 410 may transmit result information on the exchange of the plurality of UWB signals to the second electronic device 320. For example, the result information on the exchange of the plurality of UWB signals may include information (or the number of timestamps included in the fifth UWB signal) on the first number of at least a portion of the third UWB signals (e.g., a response message or RRM) among the plurality of UWB signals, identified in the first electronic device 310. For example, the result information on the exchange of the plurality of UWB signals may include quality information of the plurality of UWB signals. The quality information of the plurality of UWB signals may include information on RSSI, SNR, and/or LoS of the plurality of UWB signals. For example, the quality information of the plurality of UWB signals may include information on an average value (or intermediate value, maximum value, and minimum value) with respect to a value (e.g., RSSI, SNR, and LoS) indicating the quality of the plurality of UWB signals.

For example, whenever UWB ranging is completed, the processor 410 of the first electronic device 310 may transmit quality information of the plurality of UWB signals to the second electronic device 320. For example, the processor 410 of the first electronic device 310 may transmit quality information of the plurality of UWB signals to the second electronic device 320, based on a designated time interval.

In operation 903, the processor 410 may identify whether a third signal is received from the second electronic device 320. The processor 410 may transmit result information on the exchange of the plurality of UWB signals to the second electronic device 320 and then identify whether the third signal is received from the second electronic device 320. For example, the processor 410 may identify whether the third signal for changing a period for exchanging the plurality of UWB signals is received. The processor 410 may identify whether the third signal, for changing a period for exchanging the plurality of UWB signals from the first period to the second period, is received from the second electronic device 320. For example, the third signal may cause the first electronic device 310 to change a period for exchanging the plurality of UWB signals.

According to an embodiment, when the third signal is not received, the processor 410 may perform operation 901. For example, the processor 410 may exchange the plurality of UWB signals with the at least one external electronic device 230, based on identifying that the third signal is not received. For example, the processor 410 may perform UWB ranging according to the first period, based on identifying that the third signal is not received. Consequently, the NO branch of step 903 is optional and in step 903 the processor 410 determines that the third signal has been received.

In operation 904, when the third signal is received, the processor 410 may exchange the plurality of UWB signals with the at least one external electronic device 230 according to the second period. For example, the processor 410 may exchange the plurality of UWB signals with the at least one external electronic device 230 according to the second period, based on identifying that the third signal is received. For example, the processor 410 may perform UWB ranging according to the second period, based on identifying that the third signal is received.

According to an embodiment, while the first electronic device 310 performs UWB ranging according to the second period, the second electronic device 320 may perform UWB ranging according to the first period.

In operation 904, an operation in which the processor 410 exchanges the plurality of UWB signals with the at least one external electronic device 230 according to the second period is described, but it is not limited thereto. The processor 410 may exchange the plurality of UWB signals with the at least one external electronic device 230 according to a third period distinct from the first period and the second period. For example, the third period may be set longer than the first period.

According to an embodiment, unlike operations illustrated in FIG. 9A, while the first electronic device 310 exchanges the plurality of UWB signals with the at least one external electronic device 230 according to the first period, the processor 410 may control the second electronic device 320 so that the second electronic device 320 ceases UWB ranging.

According to an embodiment, based on the quality of the received UWB signals being below the designated quality or failing to receive at least a portion of the UWB signals, the processor 410 may control the second electronic device 320 so that the second electronic device 320 performs UWB ranging.

According to an embodiment, the processor 410 may determine a period for performing UWB ranging, based on priorities between electronic devices. For example, the processor 410 may set priorities of the first electronic device 310, the second electronic device 320, and the third electronic device (not illustrated). Security keys obtained in each of the first electronic device 310, the second electronic device 320, and the third electronic device (not illustrated) may be distinguished from each other. For example, the processor 410 may set priorities of the first electronic device 310, the second electronic device 320, and the third electronic device, based on the communication quality of the first session between the first electronic device 310 and the at least one external electronic device 230, the communication quality of the second session between the second electronic device 320 and the at least one external electronic device 230, and the communication quality of the third session between the third electronic device and the at least one external electronic device 230.

For example, the processor 410 may perform UWB ranging according to the first period (e.g., 100 ms) based on identifying that the first electronic device 310 has the highest priority. The processor 410 may control the second electronic device 320 to perform UWB ranging according to the second period (e.g., 300 ms), based on identifying that the second electronic device 320 has a second priority. The processor 410 may control the third electronic device to perform UWB ranging according to the third period (e.g., 500 ms) based on identifying that the third electronic device has the lowest priority.

According to an embodiment, a period for the first electronic device 310 and/or the second electronic device 320 to exchange the plurality of other UWB signals with at least one external electronic device 230 may be changed based on a distance between a user possessing the first electronic device 310 and the external object 220. For example, as the distance between the user and the external object 220 becomes shorter, a period for exchanging the plurality of other UWB signals with the at least one external electronic device 230 may be set shorter.

Referring to FIG. 9B, in operation 961, the processor 460 of the second electronic device 320 may exchange the plurality of other UWB signals with the at least one external electronic device 230 according to the second period. For example, the processor 460 may receive a signal for controlling to exchange the plurality of other UWB signals according to the second period, from the first electronic device 310. For example, the processor 460 may exchange the plurality of other UWB signals with at least one external electronic device 230 according to the second period, based on the received signal.

For example, the processor 460 may obtain result information on the exchange of the plurality of UWB signals by exchanging the plurality of other UWB signals with the at least one external electronic device 230 according to the second period. For example, the result information on the exchange of the plurality of UWB signals may include information (or the number of timestamps included in the fifth UWB signal) on the second number of the at least a portion of the third UWB signals (e.g., a response message or RRM) among the plurality of UWB signals, identified in the second electronic device 310. For example, the result information on the exchange of the plurality of UWB signals may include quality information of the plurality of UWB signals. The quality information of the plurality of UWB signals may include information on RSSI, SNR, and/or LoS of the plurality of UWB signals. For example, the quality information of the plurality of UWB signals may include information on an average value (or intermediate values, maximum values, and minimum values) for a value (e.g., RSSI, SNR, and LoS) indicating the quality of the plurality of UWB signals.

In operation 962, the processor 460 may identify whether the service according to the location of the user possessing the first electronic device 310 and the second electronic device 320 is completed. The processor 460 may identify whether the service is completed, by identifying whether an operation of the external object 220 according to the user's location is performed. Operation 962 may correspond to operation 603 of FIG. 6.

According to an embodiment, when the service according to the location of the user possessing the first electronic device 310 and the second electronic device 320 is completed, the service according to the location of the user may be terminated. For example, the processor 410 may terminate the service according to the location of the user, based on identifying that the service according to the location of the user is completed. For example, the processor 460 may terminate UWB ranging for exchanging the plurality of UWB signals, based on identifying that the service according to the location of the user is completed.

According to an embodiment, when the service according to the location of the user possessing the first electronic device 310 and the second electronic device 320 is not completed, the processor 460 may receive result information on the exchange of the plurality of UWB signals from the first electronic device 310. For example, the result information on the exchange of the plurality of UWB signals may include information (or the number of timestamps included in the fifth UWB signal) on the first number of the at least a portion of the third UWB signals (e.g., a response message or RRM) among the plurality of UWB signals, identified in the first electronic device 310. For example, the result information on the exchange of the plurality of UWB signals may include quality information of the plurality of UWB signals. The quality information of the plurality of UWB signals may include information on RSSI, SNR, and/or LoS of the plurality of UWB signals. For example, the quality information of the plurality of UWB signals may include information on an average value (or intermediate values, maximum values, and minimum values) for a value (e.g., RSSI, SNR, and LoS) indicating the quality of the plurality of UWB signals.

In operation 963, the processor 460 may identify whether a change in a period for exchanging the plurality of other UWB signals is necessary. For example, the processor 460 may identify whether the change in the period for exchanging the plurality of other UWB signals is necessary, based on the result information on the exchange of the plurality of UWB signals identified by the first electronic device 310 and the result information on the exchange of the plurality of other UWB signals identified in the second electronic device 320.

According to an embodiment, the processor 460 may compare a result of a ranging operation (e.g., an exchange operation of the plurality of other UWB signals). For example, the processor 460 may identify the first number of at least a portion among response signals included in the plurality of UWB signals identified in the first electronic device 310 and the second number of at least a portion among the response signals included in the plurality of other UWB signals identified by the second electronic device 320. The processor 460 may identify whether a change in a period for exchanging the plurality of other UWB signals is necessary, based on identifying whether the first number is less than the second number.

According to an embodiment, when a change in a period for exchanging the plurality of other UWB signals is not necessary, the processor 460 may perform operation 961. For example, the processor 460 may exchange the plurality of other UWB signals with at least one external electronic device 230, based on identifying that a change in the period for exchanging the plurality of other UWB signals is not necessary. For example, the processor 460 may perform UWB ranging according to the second period, based on identifying that a change in the period for exchanging the plurality of other UWB signals is not necessary. Consequently, the NO branch of step 963 is optional and in step 963 the processor 460 determines that a change in a period for exchanging the plurality of other UWB signals is necessary.

In operation 964, when a change in a period for exchanging the plurality of other UWB signals is necessary, the processor 460 may transmit a third signal to the first electronic device 310. For example, the processor 460 may transmit the third signal to the first electronic device 310, based on identifying that the change in the period for exchanging the plurality of other UWB signals is necessary. For example, the processor 460 may transmit the third signal to change the period for exchanging the plurality of UWB signals in the first electronic device 310, to the first electronic device 310. For example, the processor 460 may transmit the third signal to change the period for exchanging the plurality of UWB signals from the first period to the second period, to the first electronic device 310.

In operation 965, the processor 460 may exchange the plurality of other UWB signals according to the first period. For example, the processor 460 may exchange the plurality of other UWB signals according to the first period, based on transmitting the third signal. For example, the processor 460 may change the period for exchanging the plurality of other UWB signals from the first period to the second period, based on transmitting the third signal.

According to an embodiment, while operation 965 is performed, the first electronic device 310 may perform operation 904. For example, while the first electronic device 310 exchanges the plurality of UWB signals according to the second period, the second electronic device 320 may exchange the plurality of other UWB signals according to the first period.

In operations 964 and 965, an operation in which the processor 460 exchanges the plurality of other UWB signals with the at least one external electronic device 230 according to the first period is described, but it is not limited thereto. According to an embodiment, the processor 460 may exchange the plurality of other UWB signals with the at least one external electronic device 230 according to a fourth period distinct from the first period and the second period. For example, the fourth period may be set shorter than the second period.

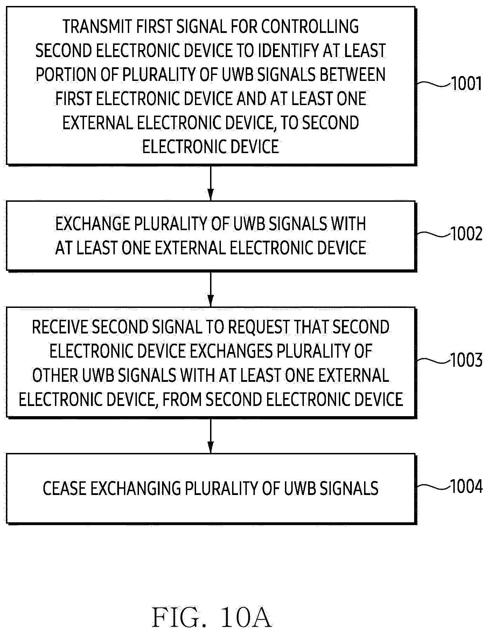

FIG. 10A is a flowchart illustrating an operation of a first electronic device, according to an embodiment.

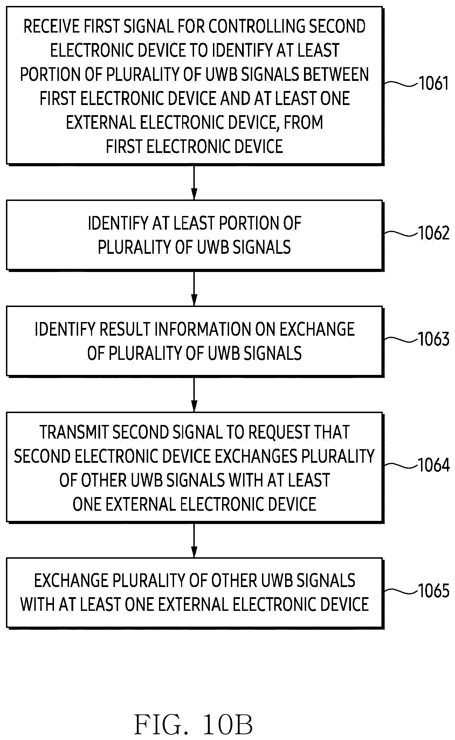

FIG. 10B is a flowchart illustrating an operation of a second electronic device, according to an embodiment.

Referring to FIG. 10A, in operation 1001, the processor 410 of the first electronic device 310 may transmit a first signal for controlling the second electronic device 320 to identify at least a portion of a plurality of UWB signals between the first electronic device 310 and at least one external electronic device 230. For example, the processor 410 may transmit the first signal for controlling the second electronic device 320 connected with the first device 320 to identify the at least a portion of the plurality of UWB signals between the first electronic device 310 and at least one external electronic device 230. The coordination of UWB communication between the first and the second electronic devices is aimed at preventing collisions between UWB signals and increasing performance, based on limiting the number of electronic devices participating in UWB ranging.

According to an embodiment, the processor 410 may identify whether the first security key for the first electronic device 310 is the same as the second security key for the second electronic device 320. For example, the first security key and the second security key may be used for UWB communication. The processor 410 may perform UWB communication with the at least one external electronic device 230 using the first security key. For example, the processor 410 may identify that the first security key is the same as the second security key, based on identifying that the root key for UWB communication is the same.

For example, the processor 410 may transmit the first signal to the second electronic device 320 through the second communication circuit 422, based on identifying that the first security key is the same as the second security key. For example, the first signal may include information for the second electronic device 320 to sniff the plurality of UWB signals between the first electronic device 310 and the at least one external electronic device 230.

According to an embodiment, the processor 410 may establish a connection with the at least one of the external electronic devices 230 (e.g., the external electronic device 230-1) through the second communication circuit 422. The processor 410 may obtain at least one parameter for performing UWB communication from at least one of the external electronic devices 230. The processor 410 may obtain the first security key based on at least one parameter. The processor 410 may transmit the at least one parameter to the second electronic device 320 so that the second electronic device 320 obtains the second security key identical to the first security key.

According to an embodiment, the processor 410 may identify information on resources of the first electronic device 310 and information on resources of the second electronic device 320 before transmitting at least one parameter to the second electronic device 320. The processor 410 may determine a device for identifying an external object including at least one external electronic device 230 as at least one of the first electronic device 310 and the second electronic device 320, based on information on resources of the first electronic device 310 and information on resources of the second electronic device 320. For example, the processor 410 may determine a device for performing a BLE scan operation as at least one of the first electronic device 310 and the second electronic device 320.

For example, the information on the resources of the first electronic device 310 may include at least one of information on remaining battery capacity of the first electronic device 310, information on the number of external devices connected to the first electronic device 310, and information on a first scan period to identify the external object 220.

For example, the information on the resources of the second electronic device 320 may include at least one of information on the remaining battery capacity of the second electronic device 320, information on the number of external devices connected to the second electronic device 320, and information on a second scan period to identify the external object 220.

In operation 1002, the processor 410 may exchange the plurality of UWB signals with the at least one external electronic device 230. For example, the processor 410 may transmit the first signal to the second electronic device 320 and then exchange the plurality of UWB signals with at least one external electronic device 230, through the first communication circuit 421.

For example, the processor 410 may transmit a first UWB signal (e.g., a pre-poll message or RCM) to the at least one external electronic device 230. The processor 410 may transmit the first UWB signals to the at least one external electronic device 230, by broadcasting (or multicasting) the first UWB signal.

The processor 410 may transmit a second UWB signal (e.g., a poll message or RIM) to the at least one external electronic device 230. The processor 410 may transmit the second UWB signal to the at least one external electronic device 230, by broadcasting (or multicasting) the second UWB signal.

In response to the second UWB signal, the processor 410 may receive at least a portion of a third UWB signals (e.g., a response message or RRM) transmitted from each of the at least one external electronic device 230.

According to an embodiment, the processor 410 may transmit result information on the exchange of the plurality of UWB signals to the second electronic device 320. For example, the result information on the exchange of the plurality of UWB signals may include information on at least one of the number (e.g., first number) of at least a portion of the third UWB signals and quality information (e.g., SNR, RSSI, or LoS) on at least a portion of the third UWB signals.

In operation 1003, the processor 410 may receive a second signal to request that the second electronic device 320 exchange the plurality of other UWB signals with the at least one external electronic device 230, from the second electronic device 320. For example, the processor 410 may receive the second signal to request that the second electronic device 320 exchange the plurality of other UWB signals with at least one external electronic device 230, from the second electronic device 320, based on exchanging the plurality of UWB signals.

In operation 1004, the processor 410 may cease exchanging the plurality of UWB signals with the at least one external electronic device 230. For example, the processor 410 may cease exchanging the plurality of UWB signals with the at least one external electronic device 230, based on the second signal. For example, based on the second signal, the processor 410 may cease exchanging the plurality of UWB signals with the at least one external electronic device 230, and identify (e.g., sniff) the plurality of other UWB signals between the second electronic device 320 and the at least one external electronic device 230. For example, the processor 410 may cease UWB ranging and identify (e.g., sniff) the plurality of other UWB signals based on the second signal.

According to an embodiment, the processor 410 may receive a sixth UWB signal (e.g., RRRM) including information on a location of the first electronic device 310 among the plurality of UWB signals, from the at least one of the external electronic devices 230. For example, the at least one external electronic device 230 may identify a relative location of the first electronic device 310 with respect to the external object 220 including the at least one external electronic device 230, based on the first signal to the fifth UWB signal. The processor 410 may not be able to identify the relative location of the first electronic device 310 with respect to the external object 220 through the exchange of the first UWB signal to the fifth UWB signal. Therefore, at least one (e.g., the external electronic device 230-1) of the at least one external electronic device 230 may transmit the sixth UWB signal including information on the location of the first electronic device 310. The processor 410 may identify information on the location of the first electronic device 310 based on the sixth UWB signal. For example, the processor 410 may identify the relative location of the first electronic device 310 with respect to the external object 220 based on the sixth UWB signal. In an embodiment, based on information on the location of the first electronic device 310, the processor 410 may transmit a signal to control that the second electronic device 320 changes a period for identifying the plurality of UWB signals between the first electronic device 310 and at least one external electronic device 230, to the second electronic device 320. For example, the processor 410 may set a longer period for the second electronic device 320 to identify the plurality of UWB signals as a location of the first electronic device 310 moves away from a location of the external object 220. For example, the processor 410 may set a shorter period for the second electronic device 320 to identify the plurality of UWB signals as the location of the first electronic device 310 approaches the location of the external object 220.

According to an embodiment, the processor 410 may identify that the first security key is distinguished from the second security key. The processor 410 may exchange the plurality of UWB signals according to the first period, based on identifying that the first security key is distinguished from the second security key. The processor 410 may transmit a signal to control that the second electronic device 320 exchanges the plurality of other UWB signals according to the second period to the second electronic device 320, based on identifying that the first security key is distinguished from the second security key.

For example, the processor 410 may set both the first electronic device 310 and the second electronic device 320 to perform UWB ranging, based on identifying that the first security key is distinguished from the second security key. For example, the processor 410 of the first electronic device 310 may perform UWB ranging according to the first period. The processor 410 of the first electronic device 310 may exchange the plurality of UWB signals according to the first period with at least one external electronic device 230. For example, the second electronic device 320 (e.g., the processor 460 of the second electronic device 320) may perform UWB ranging according to the second period. For example, the second electronic device 320 (e.g., the processor 460 of the second electronic device 320) may perform UWB ranging according to the second period.

According to an embodiment, the processor 410 may transmit result information on the exchange of the plurality of UWB signals performed according to the first period to the second electronic device 320. For example, the result information on the exchange of the plurality of UWB signals may include at least one of information on the number (e.g., first number) of at the least a portion of the third UWB signals and quality information (e.g., SNR, RSSI, or LoS) on at least a portion of the third UWB signals.

The processor 410 may transmit result information on the exchange of the plurality of UWB signals performed according to the first period, and then receive a third signal to change a period for exchanging the plurality of UWB signals from the second electronic device 320, through the second communication circuit 422. The processor 410 may change the period for exchanging the plurality of UWB signals from the first period to the second period, based on the third signal. The second electronic device 320 may change the period for exchanging the plurality of other UWB signals from the second period to the first period, based on transmitting the third signal. For example, the first period may be set shorter than the second period.

According to an embodiment, the processor 410 may exchange the plurality of UWB signals, based on identifying that the first security key is distinguished from the second security key. The processor 410 may identify a location of the first electronic device 310, based on exchanging the plurality of UWB signals. According to an embodiment, based on identifying that a distance between the location of the first electronic device 310 and the external object 220 including at least one external electronic device 230 is greater than or equal to a predefined distance, the processor 410 may transmit a signal to control that the second electronic device 320 cease exchanging the plurality of other UWB signals, to the second electronic device 320. For example, the processor 410 may perform UWB ranging only with the first electronic device 310, based on identifying that a distance between the external object 220 and a user possessing the first electronic device 310 and the second electronic device 320 is greater than or equal to a predefined distance. According to an embodiment, based on identifying that the distance between the external object 220 and the user possessing the first electronic device 310 and the second electronic device 320 is greater than or equal to the predefined distance, the processor 410 may change the period for the second electronic device 320 to exchange the plurality of other UWB signals from the second period to a third period longer than the second period.

According to an embodiment, the processor 410 may identify that the distance between the location of the first electronic device 310 and the location of the external object 220 is less than a predefined distance. The processor 410 may determine a period for exchanging the plurality of other UWB signals, based on the distance between the location of the first electronic device 310 and the location of the external object 220. The processor 410 may transmit a signal to control that the second electronic device 320 exchanges the plurality of other UWB signals according to the determined period, to the second electronic device 320.

Referring to FIG. 10B, in operation 1061, the processor 460 of the second electronic device 320 may receive a first signal to control that the second electronic device 320 identifies at least a portion of a plurality of UWB signals between the first electronic device 310 and at least one external electronic device 230, from the first electronic device 310. According to an embodiment, the processor 460 may identify whether the first security key for the first electronic device 310 used for UWB communication is the same as the second security key for the second electronic device 320. Based on identifying that the first security key is the same as the second security key, the processor 460 may receive a first signal to control that the second electronic device 320 identifies at least a portion of the plurality of UWB signals between the first electronic device 310 and at least one external electronic device 230, from the first electronic device 310.

In operation 1062, the processor 460 may identify at least a portion of the plurality of UWB signals. For example, the processor 460 may identify at least a portion of the plurality of UWB signals, while the first electronic device 310 exchanges the plurality of UWB signals with at least one external electronic device 230. For example, the processor 460 may identify (e.g., sniff) the first UWB signal, at least a portion of the third UWB signals, and the fifth UWB signal among the plurality of UWB signals. For example, based on identifying that the first security key for the first electronic device 310 is the same as the second security key for the second electronic device 320, the processor 460 may identify (e.g., sniff) the first UWB signal, at least a portion of the third UWB signals, and the fifth UWB signal among the plurality of UWB signals.

In operation 1063, the processor 460 may identify result information on the exchange of the plurality of UWB signals. For example, the processor 460 may identify result information on the exchange of the plurality of UWB signals, based on at least a portion of the plurality of UWB signals. For example, the processor 460 may identify the first number of at least a portion of the third UWB signals identified by the first electronic device 310, based on the number of time stamps included in the fifth UWB signal.

In operation 1064, the processor 460 may transmit a second signal to request that the second electronic device 320 exchanges the plurality of other UWB signals with at least one external electronic device 230, to the first electronic device 310. For example, based on the result information on the exchange of the plurality of UWB signals, the processor 460 may transmit a second signal to request that the second electronic device 320 exchanges the plurality of other UWB signals with at least one external electronic device 230, to the first electronic device 310 through the second communication circuit 422.

For example, based on identifying that the first number of at least a portion of the third UWB signals identified by the first electronic device 310 is less than the second number of at least a portion of the third UWB signals identified by the second electronic device 320, the processor 460 may transmit the second signal to the first electronic device 310.

In operation 1065, the processor 460 may exchange the plurality of other UWB signals with at least one external electronic device 230. For example, the processor 460 may exchange the plurality of other UWB signals with at least one external electronic device 230, based on transmitting the second signal. The processor 460 may cease UWB ranging performed in the first electronic device 310 and perform UWB ranging in the second electronic device 320.

According to an embodiment, based on identifying that the first security key is distinguished from the second security key, the processor 460 may exchange the plurality of other UWB signals according to the second period distinguished from the first period, while the first electronic device 310 exchanges the plurality of UWB signals according to the first period. When the first security key is distinguished from the second security key, UWB ranging may be performed in the first electronic device 310 according to the first period, and UWB ranging may be performed in the second electronic device 320 according to the second period longer than the first period. UWB ranging performed by the first electronic device 310 and UWB ranging performed by the second electronic device 320 may be performed independently.

According to an embodiment, a first electronic device 310 may comprise a first communication circuit 421 for supporting ultra-wide band (UWB) communication (or otherwise operating according to the UWB communication), a second communication circuit 422 for supporting radio access technology (RAT) (or otherwise operating according to the RAT communication) distinct from the UWB communication, a memory 430, and a processor 410 operatively coupled with the first communication circuit 421, the second communication circuit 422, and the memory 430. The processor 410 may be configured to transmit, through the second communication circuit 422, a first signal for controlling a second electronic device 320, which is connected with the first electronic device 310, to identify at least a portion of a plurality of UWB signals between the first electronic device 310 and at least one external electronic device 230, to the second electronic device 320. The processor 410 may be configured to, after transmitting the first signal to the second electronic device 320, exchange, through the first communication circuit 421, the plurality of UWB signals with the at least one external electronic device 230. The processor 410 may be configured to receive a second signal for requesting to exchange a plurality of other UWB signals with the at least one external electronic device 230 from the second electronic device 320 based on the exchange of the plurality of UWB signals. The processor 410 may be configured to cease, based on the second signal, exchanging of the plurality of UWB signals.

According to an embodiment, the processor 410 may be configured to identify whether a first security key for the first electronic device 310 used for the UWB communication is the same as a second security key for the second electronic device 320.

According to an embodiment, the processor 410 may be configured to transmit, through the second communication circuit 422, the first signal to the second electronic device 320, based on identifying that the first security key is the same as the second security key. The first signal may comprise information for the second electronic device 320 to sniff by the plurality of UWB signals between the first electronic device 310 and at least one external electronic device 230.

According to an embodiment, the processor 410 may be configured to establish, through the second communication circuit 422, a connection with at least one of the at least one external electronic device 230. The processor 410 may be configured to obtain at least one parameter for performing the UWB communication, from the at least one of the at least one external electronic device 230. The processor 410 may be configured to obtain, based on the at least one parameter, the first security key.

According to an embodiment, the processor 410 may be configured to exchange, based on identifying that the first security key is distinct from the second security key, the plurality of UWB signals according to first period. The processor 410 may be configured to transmit, to the second electronic device 320, result information on exchanging the plurality of UWB signals performed according to the first period.

According to an embodiment, the processor 410 may be configured to receive, through the second communication circuit 422, a third signal for changing a period for exchanging the plurality of UWB signals from the second electronic device 320 changing the plurality of other UWB signals according to second period. The processor 410 may be configured to change, based on the third signal, the period for exchanging the plurality of UWB signals form the first period to the second period.

According to an embodiment, the first period may be set shorter than the second period.

According to an embodiment, the processor 410 may be configured to identify, based on exchanging the plurality of UWB signals, location of the first electronic device 310. The processor 410 may be configured to transmit a signal for controlling the second electronic device 320 to cease exchanging of the plurality of other UWB signals, based on a distance between location of the first electronic device 310 and location of external object comprising the at least one external electronic device 230 is equal to or greater than a predetermined distance.

According to an embodiment, the processor 410 may be configured to identify that the distance between the location of the first electronic device 310 and the location of external object is less than the predetermined distance. The processor 410 may be configured to determine, based on the distance between the location of the first electronic device 310 and the location of external object, a period for exchanging the plurality of other UWB signals. The processor 410 may be configured to transmit, to the second electronic device 320, a signal for controlling the second electronic device 320 to exchange the plurality of other UWB signals according to the determined period.

According to an embodiment, the processor 410 may be configured to transmit a first UWB signal and a second UWB signal among the plurality of UWB signals to the at least one external electronic device 230. The processor 410 may be configured to receive, based on the second UWB signal, at least a portion of third UWB signals among the plurality of UWB signals transmitted from each of the at least one external electronic device 230. The processor 410 may be configured to transmit, based on the at least a portion of the third UWB signals, a fourth UWB signal and a fifth UWB signal among the plurality of UWB signals to the at least one external electronic device 230.

According to an embodiment, the processor 410 may be configured to transmit result information on exchanging the plurality of UWB signals to the second electronic device 320. The result information on exchanging the plurality of UWB signals may comprise at least one of information on the number of at least a portion of the third UWB signals and quality information on at least a portion of the third UWB signals.

According to an embodiment, the processor 410 may be configured to receive a sixth UWB signal including information on location of the first electronic device 310 among the plurality of UWB signals from at least one of the at least one external electronic device 230, based on the information on the location of the first electronic device 310, to the second electronic device 320. The processor 410 may be configured to transmit a signal for controlling the second electronic device 320 to change a period for identifying the plurality of UWB signals between the first electronic device 310 and the at least one external electronic device 230.

According to an embodiment, the processor 410 may be configured to sniff the plurality of other UWB signals between the second electronic device 320 and the at least one external electronic device 230 based on ceasing exchanging the plurality of UWB signals.

According to an embodiment, the processor 410 may be configured to identify information on resource of the first electronic device 310 and information on resource of the second electronic device 320. The processor 410 may be configured to determine a device for identifying an external object comprising the at least one external electronic device 230 as at least one of the first electronic device 310 and the second electronic device 320 based on the information on resource of the first electronic device 310 and the information on resource of the second electronic device 320. The information on resource of the first electronic device 310 may include at least one of information on remaining battery capacity of the first electronic device 310, information on the number of external devices connected to the first electronic device 310, or information on a first scan period for identifying the external object. The information on resource of the second electronic device 320 may include at least one of information on remaining battery capacity of the second electronic device 320, information on the number of external devices connected to the second electronic device 320, or information on a second scan period for identifying the external object.

According to an embodiment, a method of a first electronic device 310 may comprise transmitting, through a second communication circuit 422 of a first communication circuit 421 and the second communication circuit 422 of the first electronic device 310, a first signal for controlling a second electronic device 320, which is connected with the first electronic device 310, to identify at least a portion of a plurality of UWB signals between the first electronic device 310 and at least one external electronic device 230, to the second electronic device 320. The method may comprise, after transmitting the first signal to the second electronic device 320, exchanging, through the first communication circuit 421, the plurality of UWB signals with the at least one external electronic device 230. The method may comprise receiving a second signal for requesting to exchange a plurality of other UWB signals with the at least one external electronic device 230 from the second electronic device 320, based on the exchange of the plurality of UWB signals. The method may comprise ceasing, based on the second signal, exchanging of the plurality of UWB signals.

According to an embodiment, a second electronic device 320 may comprise a first communication circuit 471 for supporting ultra-wide band (UWB) communication (or otherwise operating according to the UWB communication), a second communication circuit 472 for supporting radio access technology (RAT) (or otherwise operating according to the RAT communication) distinct from the UWB communication, a memory 480, and a processor 460 operatively coupled with the first communication circuit 471, the second communication circuit 472, and the memory 480. The processor 460 may be configured to receive, through the second communication circuit 472, a first signal for controlling a second electronic device 320, which is connected with the first electronic device 310, to identify at least a portion of a plurality of UWB signals between a first electronic device 310 and at least one external electronic device 230, from the first electronic device 310. The processor 460 may be configured to, while the first electronic device 310 exchanges the plurality of UWB signals with the at least one external electronic device 230, identify at least a portion of the plurality of UWB signals. The processor 460 may be configured to identify result information on exchanging the UWB signals based on at least a portion of the plurality of UWB signals. The processor 460 may be configured to transmit, through the second communication circuit 472, a second signal for requesting that the second electronic device 320 exchanges a plurality of other UWB signals with the at least one external electronic device 230, based on the result information on exchanging the UWB signals. The processor 460 may be configured to exchange, based on transmitting the second signal, the plurality of other UWB signals with the at least one external electronic device 230.

According to an embodiment, the processor 460 may be configured to identify whether a first security key for the first electronic device 310 used for the UWB communication is the same as the second security key for the second electronic device 320.

According to an embodiment, the plurality of UWB signals may include a first UWB signal, a second UWB signal, a third UWB signal, a fourth UWB signal, and a fifth UWB signal transmitted sequentially. The processor 460 may be configured to sniff the first UWB signal transmitted from the first electronic device 310 to the at least one external electronic device 230, based on identifying that the first security key is the same as the second security key. The processor 460 may be configured to sniff at least a portion of the third UWB signals transmitted from each of the at least one external electronic device 230 to the first electronic device 310. The processor 460 may be configured to sniff the fifth UWB signal transmitted from the first electronic device 310 to the at least one external electronic device 230.

According to an embodiment, the processor 460 may be configured to identify that a first number of at least a portion of the third UWB signals identified by the first electronic device 310 are less than a second number of at least a portion of the third UWB signals identified by the second electronic device 320, based on the result information on exchanging the plurality of UWB signals. The processor 460 may be configured to transmit the second signal, based on identifying that the first number of at least one of the third UWB signals are less than the second number of at least one of the third UWB signals.

According to an embodiment, the processor 460 may be configured to exchange the plurality of other UWB signals according to a second period distinct from the first period, based on identifying that the first security key is distinct from the second security key, while the first electronic device 310 exchanges the plurality of UWB signals according to first period.

According to an embodiment, when a plurality of electronic devices (e.g., the first electronic device 310 and the second electronic device 320) simultaneously perform UWB ranging for the same service, the processor 410 of the first electronic device 310 may limit the number of electronic devices participating in UWB ranging. The processor 410 may prevent collisions between UWB signals and increase performance, based on limiting the number of electronic devices participating in UWB ranging.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein include equivalents for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A first electronic device (310) comprising:
a first communication circuit (421) supporting an ultra-wide band, UWB, communication;
a second communication circuit (422) supporting a radio access technology, RAT, distinct from the UWB communication;
a memory (430); and
a processor (410) operatively coupled with the first communication circuit (421), the second communication circuit (422), and the memory (430), wherein the processor (410) is configured to:
transmit (601), through the second communication circuit (422), a first signal for controlling a second electronic device (320), which is connected with the first electronic device (310), to sniff at least a portion of a plurality of UWB signals for UWB ranging, exchanged between the first electronic device (310) and at least one of external electronic device (230), to the second electronic device (320),
after transmitting the first signal to the second electronic device (320), exchange (602), through the first communication circuit (421), the plurality of UWB signals with the at least one external electronic device (230),
based on the exchange of the plurality of UWB signals, receive (603), from the second electronic device (320), a second signal for requesting to exchange a plurality of other UWB signals with the at least one external electronic device (230), and
cease (604), based on the second signal, exchanging of the plurality of UWB signals.

2. The first electronic device (310) of claim 1, wherein the processor (410) is further configured to identify whether a first security key for the first electronic device (310) used for the UWB communication is the same as a second security key for the second electronic device (320).

3. The first electronic device (310) of claim 2, wherein the processor (410) is further configured to based on identifying that the first security key is the same as the second security key, transmit, through the second communication circuit (422), the first signal to the second electronic device (320).

4. The first electronic device (310) of claim 2 or 3, wherein the processor (410) is further configured to:
establish, through the second communication circuit (422), a connection with at least one of the at least one external electronic device (230),
obtain at least one parameter for performing the UWB communication, from the at least one of the at least one external electronic device (230), and
obtain, based on the at least one parameter, the first security key.

5. The first electronic device (310) of any of claims 2 to 4, wherein the processor (410) is further configured to:
exchange, based on identifying that the first security key is distinct from the second security key, the plurality of UWB signals according to a first period, and
transmit, to the second electronic device (320), result information on exchanging the plurality of UWB signals performed according to the first period.

6. The first electronic device (310) of claim 5, wherein the processor (410) is further configured to:
receive, through the second communication circuit (422), a third signal for changing a period for exchanging the plurality of UWB signals from the second electronic device (320) changing the plurality of other UWB signals according to a second period, and
change, based on the third signal, the period for exchanging the plurality of UWB signals form the first period to the second period.

7. The first electronic device (310) of claim 6, wherein the first period is set shorter than the second period.

8. The first electronic device (310) of any of claims 5 to 7, wherein the processor (410) is further configured to:
identify, based on exchanging the plurality of UWB signals, location of the first electronic device (310), and
based on a distance between location of the first electronic device (310) and location of external object (220) comprising the at least one external electronic device (230) is equal to or greater than a predetermined distance, transmit a signal for controlling the second electronic device (320) to cease exchanging of the plurality of other UWB signals.

9. The first electronic device (310) of claim 8, wherein the processor (410) is further configured to:
identify that the distance between the location of the first electronic device (310) and the location of external object (220) is less than the predetermined distance,
determine, based on the distance between the location of the first electronic device (310) and the location of external object (220), the period for exchanging the plurality of other UWB signals, and
transmit, to the second electronic device (320), a signal for controlling the second electronic device (320) to exchange the plurality of other UWB signals according to the determined period.

10. The first electronic device (310) of any of claims 1 to 9, wherein the processor (410) is further configured to:
transmit a first UWB signal (701, 811) and a second UWB signal (702, 812) among the plurality of UWB signals to the at least one external electronic device (230),
receive, based on the second UWB signal, at least a portion of third UWB signals (703, 813) among the plurality of UWB signals transmitted from each of the at least one external electronic device (230), and
transmit, based on the at least a portion of the third UWB signals (703, 813), a fourth UWB signal (704, 814) and a fifth UWB signal (705, 815) among the plurality of UWB signals to the at least one external electronic device (230).

11. The first electronic device (310) of claim 10, wherein the processor (410) is further configured to transmit result information on exchanging the plurality of UWB signals to the second electronic device (320),
wherein the result information on exchanging the plurality of UWB signals comprises at least one of information on the number of at least a portion of the third UWB signals and quality information on at least a portion of the third UWB signals.

12. The first electronic device (310) of any of claims 10 or 11, wherein the processor (410) is further configured to:
receive a sixth UWB signal including information on location of the first electronic device (310) among the plurality of UWB signals from at least one of the at least one external electronic device (230), based on the information on the location of the first electronic device (310), to the second electronic device (320), and
transmit a signal for controlling the second electronic device (320) to change a period for identifying the plurality of UWB signals between the first electronic device (310) and the at least one external electronic device (230).

13. The first electronic device (310) of any of claims 1 to 12, wherein the processor (410) is further configured to sniff (711, 713, 715) the plurality of other UWB signals between the second electronic device (320) and the at least one external electronic device (230) based on ceasing exchanging the plurality of UWB signals.

14. The first electronic device (310) of any of claims 1 to 13, wherein the processor (410) is further configured to:
identify information on resource of the first electronic device (310) and information on resource of the second electronic device (320), and
determine a device for identifying an external object (220) comprising the at least one external electronic device (230) as at least one of the first electronic device (310) and the second electronic device (320) based on the information on resource of the first electronic device (310) and the information on resource of the second electronic device (320),
wherein the information on resource of the first electronic device (310) includes at least one of information on remaining battery (189) capacity of the first electronic device (310), information on the number of external devices connected to the first electronic device (310), or information on a first scan period for identifying the external object (220), and
wherein the information on resource of the second electronic device (320) includes at least one of information on remaining battery (189) capacity of the second electronic device (320), information on the number of external devices connected to the second electronic device (320), or information on a second scan period for identifying the external object (220).

15. A method of a first electronic device (310) comprising:
transmitting (601), through a second communication circuit (422) of a first communication circuit (421) supporting an ultra-wide band, UWB, communication and the second communication circuit (422) supporting a radio access technology, RAT, distinct from the UWB communication of the first electronic device (310), a first signal for controlling a second electronic device (320), which is connected with the first electronic device (310), to sniff at least a portion of a plurality of UWB signals for UWB ranging, exchanged between the first electronic device (310) and at least one of external electronic device (230), to the second electronic device (320),
after transmitting the first signal to the second electronic device (320), exchanging (602), through the first communication circuit (421), the plurality of UWB signals with the at least one external electronic device (230),
based on the exchange of the plurality of UWB signals, receiving (603), from the second electronic device (320), a second signal for requesting to exchange a plurality of other UWB signals with the at least one external electronic device (230), and
ceasing (604), based on the second signal, exchanging of the plurality of UWB signals.

## Patentansprüche

1. Erste elektronische Vorrichtung (310), umfassend:
eine erste Kommunikationsschaltung (421), die eine Ultrabreitband-, UWB, - Kommunikation unterstützt;
eine zweite Kommunikationsschaltung (422), die eine sich von der UWB-Kommunikation unterscheidende Funkzugangstechnologie, RAT, unterstützt;
einen Speicher (430); und
einen Prozessor (410), der funktionsfähig mit der ersten Kommunikationsschaltung (421), der zweiten Kommunikationsschaltung (422) und dem Speicher (430) gekoppelt ist, wobei der Prozessor (410) dazu konfiguriert ist,
über die zweite Kommunikationsschaltung (422) ein erstes Signal an eine mit der ersten elektronischen Vorrichtung (310) verbundene zweite elektronische Vorrichtung (320) zu senden (601), um die zweite elektronische Vorrichtung (320) so zu steuern, dass sie zumindest einen Teil einer Vielzahl von UWB-Signalen für die UWB-Entfernungsmessung erschnüffelt, die zwischen der ersten elektronischen Vorrichtung (310) und mindestens einer externen elektronischen Vorrichtung (230) ausgetauscht werden,
nach dem Senden des ersten Signals an die zweite elektronische Vorrichtung (320) die Vielzahl von UWB-Signalen über die erste Kommunikationsschaltung (421) mit der mindestens einen externen elektronischen Vorrichtung (230) auszutauschen (602),
auf der Grundlage des Austauschs der Vielzahl von UWB-Signalen von der zweiten elektronischen Vorrichtung (320) ein zweites Signal zum Anfordern des Austauschs einer Vielzahl weiterer UWB-Signale mit der mindestens einen externen elektronischen Vorrichtung (230) zu empfangen (603) und
auf der Grundlage des zweiten Signals den Austausch der Vielzahl von UWB-Signalen zu beenden (604).

2. Erste elektronische Vorrichtung (310) nach Anspruch 1, wobei der Prozessor (410) ferner dazu konfiguriert ist, zu identifizieren, ob ein für die UWB-Kommunikation verwendeter erster Sicherheitsschlüssel für die erste elektronische Vorrichtung (310) derselbe ist wie ein zweiter Sicherheitsschlüssel für die zweite elektronische Vorrichtung (320).

3. Erste elektronische Vorrichtung (310) nach Anspruch 2, wobei der Prozessor (410) ferner dazu konfiguriert ist, auf der Grundlage der Identifizierung, dass der erste Sicherheitsschlüssel derselbe ist wie der zweite Sicherheitsschlüssel, das erste Signal über die zweite Kommunikationsschaltung (422) an die zweite elektronische Vorrichtung (320) zu senden.

4. Erste elektronische Vorrichtung (310) nach Anspruch 2 oder 3, wobei der Prozessor (410) ferner dazu konfiguriert ist,
über die zweite Kommunikationsschaltung (422) eine Verbindung mit mindestens einer der mindestens einen externen elektronischen Vorrichtung (230) herzustellen,
mindestens einen Parameter zur Durchführung der UWB-Kommunikation von der mindestens einen der mindestens einen externen elektronischen Vorrichtung (230) zu erhalten und
auf der Grundlage des mindestens einen Parameters den ersten Sicherheitsschlüssel zu erhalten.

5. Erste elektronische Vorrichtung (310) nach einem der Ansprüche 2 bis 4, wobei der Prozessor (410) ferner dazu konfiguriert ist,
auf der Grundlage der Identifizierung, dass sich der erste Sicherheitsschlüssel vom zweiten Sicherheitsschlüssel unterscheidet, die Vielzahl von UWB-Signalen gemäß einer ersten Periode auszutauschen und
Ergebnisinformationen über den gemäß der ersten Periode durchgeführten Austausch der Vielzahl von UWB-Signalen an die zweite elektronische Vorrichtung (320) zu senden.

6. Erste elektronische Vorrichtung (310) nach Anspruch 5, wobei der Prozessor (410) ferner dazu konfiguriert ist,
über die zweite Kommunikationsschaltung (422) ein drittes Signal zum Ändern einer Periode für den Austausch der Vielzahl von UWB-Signalen von der zweiten elektronischen Vorrichtung (320) zu empfangen, die die Vielzahl weiterer UWB-Signale gemäß einer zweiten Periode ändert, und
auf der Grundlage des dritten Signals die Periode für den Austausch der Vielzahl von UWB-Signalen von der ersten Periode zur zweiten Periode zu wechseln.

7. Erste elektronische Vorrichtung (310) nach Anspruch 6, wobei die erste Periode kürzer als die zweite Periode eingestellt ist.

8. Erste elektronische Vorrichtung (310) nach einem der Ansprüche 5 bis 7, wobei der Prozessor (410) ferner dazu konfiguriert ist,
auf der Grundlage des Austauschs der Vielzahl von UWB-Signalen den Standort der ersten elektronischen Vorrichtung (310) zu identifizieren und
basierend darauf, dass ein Abstand zwischen dem Standort der ersten elektronischen Vorrichtung (310) und dem Standort eines externen Objekts (220), das die mindestens eine externe elektronische Vorrichtung (230) umfasst, gleich oder größer als ein vorbestimmter Abstand ist, ein Signal zu senden, um die zweite elektronische Vorrichtung (320) so zu steuern, dass sie den Austausch der Vielzahl weiterer UWB-Signale beendet.

9. Erste elektronische Vorrichtung (310) nach Anspruch 8, wobei der Prozessor (410) ferner dazu konfiguriert ist,
zu identifizieren, dass der Abstand zwischen dem Standort der ersten elektronischen Vorrichtung (310) und dem Standort des externen Objekts (220) kleiner als der vorbestimmte Abstand ist,
auf der Grundlage des Abstands zwischen dem Standort der ersten elektronischen Vorrichtung (310) und dem Standort des externen Objekts (220) die Periode für den Austausch der Vielzahl weiterer UWB-Signale zu bestimmen und
ein Signal an die zweite elektronische Vorrichtung (320) zu senden, um die zweite elektronische Vorrichtung (320) so zu steuern, dass sie die Vielzahl weiterer UWB-Signale gemäß der bestimmten Periode austauscht.

10. Erste elektronische Vorrichtung (310) nach einem der Ansprüche 1 bis 9, wobei der Prozessor (410) ferner dazu konfiguriert ist,
ein erstes UWB-Signal (701, 811) und ein zweites UWB-Signal (702, 812) unter der Vielzahl von UWB-Signalen an die mindestens eine externe elektronische Vorrichtung (230) zu senden,
auf der Grundlage des zweiten UWB-Signals zumindest einen Teil dritter UWB-Signale (703, 813) unter der Vielzahl von UWB-Signalen zu empfangen, die von jeder der mindestens einen externen elektronischen Vorrichtung (230) gesendet werden, und
auf der Grundlage des zumindest einen Teils der dritten UWB-Signale (703, 813) ein viertes UWB-Signal (704, 814) und ein fünftes UWB-Signal (705, 815) unter der Vielzahl von UWB-Signalen an die mindestens eine externe elektronische Vorrichtung (230) zu senden.

11. Erste elektronische Vorrichtung (310) nach Anspruch 10, wobei der Prozessor (410) ferner dazu konfiguriert ist, Ergebnisinformationen über den Austausch der Vielzahl von UWB-Signalen an die zweite elektronische Vorrichtung (320) zu senden,
wobei die Ergebnisinformationen über den Austausch der Vielzahl von UWB-Signalen mindestens eines von Informationen über die Anzahl mindestens eines Teils der dritten UWB-Signale und Qualitätsinformationen über mindestens einen Teil der dritten UWB-Signale umfassen.

12. Erste elektronische Vorrichtung (310) nach einem der Ansprüche 10 oder 11, wobei der Prozessor (410) ferner dazu konfiguriert ist,
ein sechstes UWB-Signal unter der Vielzahl von UWB-Signalen, das Informationen über den Standort der ersten elektronischen Vorrichtung (310) enthält, von mindestens einer der mindestens einen externen elektronischen Vorrichtung (230) auf der Grundlage der Informationen über den Standort der ersten elektronischen Vorrichtung (310) an die zweite elektronische Vorrichtung (320) zu empfangen und
ein Signal zur Steuerung der zweiten elektronischen Vorrichtung (320) zu senden, um eine Periode zur Identifizierung der Vielzahl von UWB-Signalen zwischen der ersten elektronischen Vorrichtung (310) und der mindestens einen externen elektronischen Vorrichtung (230) zu ändern.

13. Erste elektronische Vorrichtung (310) nach einem der Ansprüche 1 bis 12, wobei der Prozessor (410) ferner dazu konfiguriert ist, die Vielzahl weiterer UWB-Signale zwischen der zweiten elektronischen Vorrichtung (320) und der mindestens einen externen elektronischen Vorrichtung (230) auf der Grundlage der Beendung des Austauschs der Vielzahl von UWB-Signalen zu erschnüffeln (711, 713, 715).

14. Erste elektronische Vorrichtung (310) nach einem der Ansprüche 1 bis 13, wobei der Prozessor (410) ferner dazu konfiguriert ist,
Informationen über Ressourcen der ersten elektronischen Vorrichtung (310) und Informationen über Ressourcen der zweiten elektronischen Vorrichtung (320) zu identifizieren und
auf der Grundlage der Informationen über Ressourcen der ersten elektronischen Vorrichtung (310) und der Informationen über Ressourcen der zweiten elektronischen Vorrichtung (320) eine Vorrichtung zur Identifizierung eines externen Objekts (220) zu bestimmen, das die mindestens eine externe elektronische Vorrichtung (230) als mindestens eine von der ersten elektronischen Vorrichtung (310) und der zweiten elektronischen Vorrichtung (320) umfasst,
wobei die Informationen über Ressourcen der ersten elektronischen Vorrichtung (310) mindestens eines von Informationen über die verbleibende Kapazität der Batterie (189) der ersten elektronischen Vorrichtung (310), Informationen über die Anzahl an die erste elektronische Vorrichtung (310) angeschlossener externer Vorrichtungen und Informationen über eine erste Abtastperiode zur Identifizierung des externen Objekts (220) umfassen, und
wobei die Informationen über Ressourcen der zweiten elektronischen Vorrichtung (320) mindestens eines von Informationen über die verbleibende Kapazität der Batterie (189) der zweiten elektronischen Vorrichtung (320), Informationen über die Anzahl an die zweite elektronische Vorrichtung (320) angeschlossener externer Vorrichtungen und Informationen über eine zweite Abtastperiode zur Identifizierung des externen Objekts (220) umfassen.

15. Verfahren einer ersten elektronischen Vorrichtung (310), umfassend:
Senden (601) eines ersten Signals über eine zweite Kommunikationsschaltung (422) einer ersten Kommunikationsschaltung (421), die eine Ultrabreitband-, UWB,- Kommunikation unterstützt, wobei die zweite Kommunikationsschaltung (422) eine sich von der UWB-Kommunikation der ersten elektronischen Vorrichtung (310) unterscheidende Funkzugangstechnologie, RAT, unterstützt, an eine mit der ersten elektronischen Vorrichtung (310) verbundene zweite elektronische Vorrichtung (320), um die zweite elektronische Vorrichtung (320) so zu steuern, dass sie zumindest einen Teil einer Vielzahl von UWB-Signalen für die UWB-Entfernungsmessung erschnüffelt, die zwischen der ersten elektronischen Vorrichtung (310) und mindestens einer externen elektronischen Vorrichtung (230) ausgetauscht werden,
Austauschen (602) der Vielzahl von UWB-Signalen mit der mindestens einen externen elektronischen Vorrichtung (230) über die erste Kommunikationsschaltung (421) nach dem Senden des ersten Signals an die zweite elektronische Vorrichtung (320),
Empfangen (603) eines zweiten Signals zum Anfordern des Austauschs einer Vielzahl weiterer UWB-Signale mit der mindestens einen externen elektronischen Vorrichtung (230) von der zweiten elektronischen Vorrichtung (320) auf der Grundlage des Austauschs der Vielzahl von UWB-Signalen, und
Beenden (604) des Austausches der Vielzahl von UWB-Signalen auf der Grundlage des zweiten Signals.

## Revendications

1. Premier dispositif électronique (310) comprenant:
un premier circuit de communication (421) prenant en charge une communication à bande ultra-large, UWB;
un second circuit de communication (422) prenant en charge une technologie d'accès radio, RAT, distincte de la communication UWB;
une mémoire (430); et
un processeur (410) couplé de manière opérationnelle au premier circuit de communication (421), au second circuit de communication (422) et à la mémoire (430), dans lequel le processeur (410) est configuré pour:
transmettre (601), par l'intermédiaire du second circuit de communication (422), au second dispositif électronique (320), un premier signal destiné à commander le second dispositif électronique (320), qui est connecté au premier dispositif électronique (310), pour renifler au moins une partie d'une pluralité de signaux UWB pour une télémétrie UWB, échangés entre le premier dispositif électronique (310) et au moins un dispositif électronique externe (230),
après la transmission du premier signal au second dispositif électronique (320), échanger (602), par l'intermédiaire du premier circuit de communication (421), la pluralité de signaux UWB avec l'au moins un dispositif électronique externe (230),
sur la base de l'échange de la pluralité de signaux UWB, recevoir (603), depuis le second dispositif électronique (320), un second signal destiné à demander d'échanger une pluralité d'autres signaux UWB avec l'au moins un dispositif électronique externe (230), et
cesser (604), sur la base du second signal, l'échange de la pluralité de signaux UWB.

2. Premier dispositif électronique (310) selon la revendication 1, dans lequel le processeur (410) est en outre configuré pour identifier si une première clé de sécurité pour le premier dispositif électronique (310) utilisée pour la communication UWB est identique à une seconde clé de sécurité pour le second dispositif électronique (320).

3. Premier dispositif électronique (310) selon la revendication 2, dans lequel le processeur (410) est en outre configuré pour, sur la base de l'identification du fait que la première clé de sécurité est identique à la seconde clé de sécurité, transmettre, par l'intermédiaire du second circuit de communication (422), le premier signal au second dispositif électronique (320).

4. Premier dispositif électronique (310) selon la revendication 2 ou 3, dans lequel le processeur (410) est en outre configuré pour:
établir, par l'intermédiaire du second circuit de communication (422), une connexion avec au moins un de l'au moins un dispositif électronique externe (230),
obtenir au moins un paramètre pour effectuer la communication UWB, depuis l'au moins un de l'au moins un dispositif électronique externe (230), et
obtenir, sur la base de l'au moins un paramètre, la première clé de sécurité.

5. Premier dispositif électronique (310) selon l'une quelconque des revendications 2 à 4, dans lequel le processeur (410) est en outre configuré pour:
échanger, sur la base de l'identification du fait que la première clé de sécurité est distincte de la seconde clé de sécurité, la pluralité de signaux UWB selon une première période, et
transmettre, au second dispositif électronique (320), des informations de résultat concernant l'échange de la pluralité de signaux UWB effectué selon la première période.

6. Premier dispositif électronique (310) selon la revendication 5, dans lequel le processeur (410) est en outre configuré pour:
recevoir, par l'intermédiaire du second circuit de communication (422), un troisième signal destiné à modifier une période pour échanger la pluralité de signaux UWB depuis le second dispositif électronique (320) modifiant la pluralité d'autres signaux UWB selon une seconde période, et
modifier, sur la base du troisième signal, la période pour échanger la pluralité de signaux UWB de la première période à la seconde période.

7. Premier dispositif électronique (310) selon la revendication 6, dans lequel la première période est définie plus courte que la seconde période.

8. Premier dispositif électronique (310) selon l'une quelconque des revendications 5 à 7, dans lequel le processeur (410) est en outre configuré pour:
identifier, sur la base de l'échange de la pluralité de signaux UWB, une location du premier dispositif électronique (310), et
sur la base du fait qu'une distance entre la location du premier dispositif électronique (310) et une location d'un objet externe (220) comprenant l'au moins un dispositif électronique externe (230) est supérieure ou égale à une distance prédéterminée, transmettre un signal destiné à commander le second dispositif électronique (320) pour cesser l'échange de la pluralité d'autres signaux UWB.

9. Premier dispositif électronique (310) selon la revendication 8, dans lequel le processeur (410) est en outre configuré pour:
identifier que la distance entre la location du premier dispositif électronique (310) et la location de l'objet externe (220) est inférieure à la distance prédéterminée,
déterminer, sur la base de la distance entre la location du premier dispositif électronique (310) et la location de l'objet externe (220), la période pour échanger la pluralité d'autres signaux UWB, et
transmettre, au second dispositif électronique (320), un signal destiné à commander le second dispositif électronique (320) pour échanger la pluralité d'autres signaux UWB selon la période déterminée.

10. Premier dispositif électronique (310) selon l'une quelconque des revendications 1 à 9, dans lequel le processeur (410) est en outre configuré pour:
transmettre un premier signal UWB (701, 811) et un second signal UWB (702, 812) parmi la pluralité de signaux UWB à l'au moins un dispositif électronique externe (230),
recevoir, sur la base du second signal UWB, au moins une partie de troisièmes signaux UWB (703, 813) parmi la pluralité de signaux UWB transmis depuis chacun de l'au moins un dispositif électronique externe (230), et
transmettre, sur la base de l'au moins une partie des troisièmes signaux UWB (703, 813), un quatrième signal UWB (704, 814) et un cinquième signal UWB (705, 815) parmi la pluralité de signaux UWB à l'au moins un dispositif électronique externe (230).

11. Premier dispositif électronique (310) selon la revendication 10, dans lequel le processeur (410) est en outre configuré pour transmettre des informations de résultat concernant l'échange de la pluralité de signaux UWB au second dispositif électronique (320),
dans lequel les informations de résultat concernant l'échange de la pluralité de signaux UWB comprennent au moins l'une parmi des informations concernant le nombre d'au moins une partie des troisièmes signaux UWB et des informations de qualité concernant au moins une partie des troisièmes signaux UWB.

12. Premier dispositif électronique (310) selon l'une quelconque des revendications 10 ou 11, dans lequel le processeur (410) est en outre configuré pour:
recevoir un sixième signal UWB comprenant des informations concernant une location du premier dispositif électronique (310) parmi la pluralité de signaux UWB depuis au moins un de l'au moins un dispositif électronique externe (230), sur la base des informations concernant la location du premier dispositif électronique (310), au second dispositif électronique (320), et
transmettre un signal destiné à commander le second dispositif électronique (320) pour modifier une période pour identifier la pluralité de signaux UWB entre le premier dispositif électronique (310) et l'au moins un dispositif électronique externe (230).

13. Premier dispositif électronique (310) selon l'une quelconque des revendications 1 à 12, dans lequel le processeur (410) est en outre configuré pour renifler (711, 713, 715) la pluralité d'autres signaux UWB entre le second dispositif électronique (320) et l'au moins un dispositif électronique externe (230) sur la base de la cessation de l'échange de la pluralité de signaux UWB.

14. Premier dispositif électronique (310) selon l'une quelconque des revendications 1 à 13, dans lequel le processeur (410) est en outre configuré pour:
identifier des informations concernant une ressource du premier dispositif électronique (310) et des informations concernant une ressource du second dispositif électronique (320), et
déterminer un dispositif pour identifier un objet externe (220) comprenant l'au moins un dispositif électronique externe (230) comme étant au moins l'un parmi le premier dispositif électronique (310) et le second dispositif électronique (320) sur la base des informations concernant la ressource du premier dispositif électronique (310) et des informations concernant la ressource du second dispositif électronique (320),
dans lequel les informations concernant la ressource du premier dispositif électronique (310) comprennent au moins l'une parmi des informations concernant une capacité restante de batterie (189) du premier dispositif électronique (310), des informations concernant le nombre de dispositifs externes connectés au premier dispositif électronique (310), ou des informations concernant une première période de balayage pour identifier l'objet externe (220), et
dans lequel les informations concernant la ressource du second dispositif électronique (320) comprennent au moins l'une parmi des informations concernant une capacité restante de batterie (189) du second dispositif électronique (320), des informations concernant le nombre de dispositifs externes connectés au second dispositif électronique (320), ou des informations concernant une seconde période de balayage pour identifier l'objet externe (220).

15. Procédé d'un premier dispositif électronique (310) comprenant:
transmettre (601), par l'intermédiaire d'un second circuit de communication (422), parmi un premier circuit de communication (421) prenant en charge une communication à bande ultra-large, UWB, et le second circuit de communication (422) prenant en charge une technologie d'accès radio, RAT, distincte de la communication UWB du premier dispositif électronique (310), au second dispositif électronique (320), un premier signal destiné à commander le second dispositif électronique (320), qui est connecté au premier dispositif électronique (310), pour renifler au moins une partie d'une pluralité de signaux UWB pour une télémétrie UWB, échangés entre le premier dispositif électronique (310) et au moins un dispositif électronique externe (230),
après la transmission du premier signal au second dispositif électronique (320), échanger (602), par l'intermédiaire du premier circuit de communication (421), la pluralité de signaux UWB avec l'au moins un dispositif électronique externe (230),
sur la base de l'échange de la pluralité de signaux UWB, recevoir (603), depuis le second dispositif électronique (320), un second signal destiné à demander d'échanger une pluralité d'autres signaux UWB avec l'au moins un dispositif électronique externe (230), et
cesser (604), sur la base du second signal, l'échange de la pluralité de signaux UWB.
